# EUROPEAN PATENT SPECIFICATION

(11) **EP 1 164 550 B1**
(45) Date of publication and mention of the grant of the patent: **03.12.2008**
(21) Application number: 01114516.6
(22) Date of filing: 15.06.2001
(51) Int. Cl.: G01M 13/04, G07C 3/00

(54) **Machine component monitoring, diagnosing and selling system**
Überwachungs-, Diagnose- und Verkaufssystem für Maschinenkomponenten
Système de surveillance, de diagnostic et de vente d'éléments de machine

(30) Priority: 16.06.2000 JP 2000180890; 25.08.2000 JP 2000255721
(43) Date of publication of application: 19.12.2001
(73) Proprietor: NTN Corporation, Osaka-shi, Osaka 550-0003 (JP)
(72) Inventor: Gotou, Yasuhiro, Shinagawa-ku, Tokyo 141-0031 (JP); Hakamata, Hiroyuki, Iwata-shi, Shizuoka 438-0037 (JP); Azuma, Masataka, Shinagawa-ku, Tokyo 141-0031 (JP)
(74) Representative: Behrmann, Niels

(56) References cited:
- EP-A- 0 599 606
- EP-A- 0 810 555
- GB-A- 2 338 848
- US-A- 5 854 994

## Description

### BACKGROUND OF THE INVENTION

### (Field of the Invention)

The present invention relates to a machine component monitoring system for monitoring statuses such as the presence or absence of an abnormality and/or lifetime of machine components employed in a machine system such as, for example, an iron work plant or a paper making plant that are equipped with such machine components each having rolling elements such as, for example, rolling bearings, constant speed joints or ball screw mechanisms, to a machine component monitoring and diagnosing system for enabling a manufacturer of the mechanical component to monitor and diagnosis at a remote location the statuses such as the presence or absence of an abnormality and/or lifetime of machine components each having rolling elements such as, for example, rolling bearings, constant speed joints or ball screw mechanisms that are employed in the machine system, and to a machine component monitoring, diagnosing and selling system for adding merchandise information to results of diagnosis after the machine components have been monitored and diagnosed.

### (Description of the Prior Art)

As is well known to those skilled in the art, the iron work plant or the paper making plant employs a number of rolls and roll support bearings are used to support those rolls. The roll support bearings, particularly, rolling roll support bearings used in a continuous casting machine are used under a relatively large load and at an elevated temperature and, thus, under severe operating conditions. Since sudden interruption of the operation of the plans as a result of an abnormality occurring in some of the support bearings would highly result in a considerable loss, the support bearings are regularly replaced at intervals of a few months.

However, since during the routine replacement it often occurs that some of the support bearings that can still be usable are replaced in anticipation of safety, the support bearings are necessarily used uneconomically, resulting in increase of the cost of maintenance of the facilities. If there is a way to grasp the status of the lifetime of each support bearing, the time span between the succeeding replacements of the support bearings can be prolonged. Accordingly, attempts have been made to use vibrations sensors to monitor the status of the lifetime of each support bearing, but since the number of the support bearings used is considerable, a relatively high cost is incurred in monitoring those support bearings.

As discussed above, the roll support bearings used in the iron work plant or the paper making plant are monitored by the use of the above described vibration sensors to determine the status of the lifetime of each support bearing. However, since each support bearing is of a relatively large size, the iron work plant or the paper making plant makes it practice to perform its own monitoring scheme to determine and diagnosis the status of the lifetime of each support bearing with the use of the vibration sensors as a routine for maintenance of the facilities. Specifically, based on the status of the lifetime obtained as a result of monitoring, the iron work plant or the paper making plant sets up a plan to replace the machine components, asks the manufacturer of the support bearings for estimation required for the replacement, and order the support bearings to be replaced after the stock, the price and the expected date of delivery have been confirmed.

Similar monitoring and diagnosis are also performed in any other facility such as, for example, a production line, or automobile or railway train servicing facilities in traffic industries. Where the particular plant cannot perform the diagnosis on its own, the plant makes it practice to call for a technician from the bearing manufacturer to make a diagnosis in situ at the plant.

However, with a diagnosing instrument used in the iron work plant or the paper making plant and also with the technician in the plants, a problem has been encountered that an accurate diagnosis is difficult to achieve. In the event of occurrence of an abnormality resulting from an erroneous diagnosis, a loss such as sudden scramming of the plant would occur. For this reason, some spare bearings have to be stocked in hand in anticipation of the erroneous diagnosis. By way of example, a paper making system used in the paper making plant makes use of 200 to 300 rolls with their opposite ends rotatably supported by respective bearings, thus utilizing a relatively large number of the bearings. Accordingly, in order for all of those bearings to keep in good operating conditions, monitoring and diagnosing have to be performed frequently and on a regular basis, thus requiring a relatively large number of spare bearings in anticipation of future replacement.

Employment of diagnosing instruments and/or technicians in the iron work plant or the paper making plant is indeed uneconomical since the diagnosing instruments and/or the technicians sometimes lead to unnecessary expenditure.

Also, if after the machine components, i.e., the bearings have been diagnosed at the iron work plant or the paper making plant and then the attendant worker consults with a sales representative sent from the bearing manufacturer, a relatively large amount of time and labor are required and, because of it, it often occurs that delivery of the ordered bearing will be delayed. Under these circumstances, the plant would be required to store the spare bearings for use in the future. On the other hand, even the bearing manufacturer would be required to store a large amount of bearings in anticipation of varying orders and, also, has to employ personnel for sales activities while requiring a relatively large amount of expenditure for personnel shift.

US 5,854,994 discloses a vibration monitor and transmission system, this document representing the preamble of claim 1.

Furthermore, EP 0599606A2 describes a system for (remote) machine system diagnosis.

Accordingly, the present invention has for its primary object to provide a system capable of efficiently monitoring the status of lifetime of machine components.

In order to accomplish this object, the present invention provides a monitoring system for monitoring machine components employed in a machine system utilizing a plurality of such machine components each having rolling elements. A plurality of determining units each connected with a plurality of sensors are connected with a common control means. Each of the sensors is arranged on the respective machine component for detecting an influence signal resulting from passage of the rolling elements induced in the machine component. Each of the determining units is operable to determine according to a predetermined process set-up condition status such as presence or absence of an abnormality, lifetime and others of the machine component, which is associated with such sensor, in reference to an output signal from the associated sensor. The control means is operable to collect results of determination performed by each of the determining units.

According to the present invention, the influence signal resulting from passage of the rolling elements occurring in the machine component is detected by one of the sensors which is provided in the vicinity of such machine component. In other words, the sensor employed in the system of the structure described above is used to detect strains, change in load, vibration or the like. The influence signal is any signal that is generated in the machine component as a result of passage of the rolling elements, which may represents, for example, strains, change in load, vibration and others produced at a predetermined side of the machine component. In the event of the presence of a defect in the machine component, the influence signal contains a signal component brought about by the defect. Each of the determining units determines the presence or absence of an abnormality and/or the status of lifetime or the like of the machine component according to a predetermined process set-up condition in reference to the influence signal that has resulted from passage of the rolling element, which influence signal contains the defect signal component. A result of determination is collected by the control means. In this way, since the status of any of the machine components can be grasped, no spare period need be taken sufficiently long and the time span between the succeeding replacement times can be prolonged. Also, in the event of the incipiency of the abnormality in the machine component, the abnormality can be quickly detected and counteracted upon before the machine is scrammed.

Also, since the control means is used to collect respective results of determination performed by the determining units, monitoring of the presence or absence of an abnormality and/or the lifetime of any of the machine components can be accomplished with a simplified construction, at a low cost, accurately and efficiently.

Since each of the determining units is connected with the plural sensors so that the machine component associated with the respective sensor can be determined, a minimized number of the determining units is sufficient to perform determination with respect to an increased number of the machine components. Where the machine components used in a particular machine system are of the same specification, each of the determining units can process any of the output signals from the various sensors according to the same process set-up condition. Also, since the determining units each connected with the plural sensors are connected to the common control means, the results of determination performed by a considerable number of the determining units, respectively, can be collected by the sole control means. For this reason, for the machine system provided with a considerable number of the machine components, the single control means is sufficient to extensively monitor those machine components with high efficiency.

While it is generally recognized that if too many sensors are connected with one determining unit, not only must the determining unit have a high speed processing performance, a relatively long wiring would be required between the sensors and the determining unit particularly in the case of the large scale machine system, resulting in a problem in transmission of the sensor signal. However, in the present invention, since the plural determining units are used each having been connected with the plural sensors and are connected with the common control means, each of the determining units may not be required to have a high performance and no degradation of the sensor signal or signals during transmission would occur. For this reason, with the simplified and inexpensive system, precise determination is possible. In other words, monitoring of the presence or absence of an abnormality and/or the status of lifetime of each of the machine components having rolling elements can be achieved at a reduced cost, precisely and efficiently even though the system is of a simple structure.

It is to be noted that for the sensors used in the practice of the present invention, any sensor can be employed provided that it can detect the influence signal in which a defect signal appears in a passage signal of the rolling elements. Also, when the sensors are arranged in direct contact with the machine components, the passage signal of the rolling elements containing the above described defect signal can be obtained.

Each of the determining units determines the presence or absence of an abnormality in a sensor waveform, which is the output signal from the associated sensor, as a determining process. In other words, each of the determining units determines the presence or absence of an abnormality in the waveform by processing the detected signal from the sensor connected therewith, according to the process set-up condition. By finding the presence or absence of the abnormality in the waveform the presence or absence of an abnormality and/or the status of lifetime of the machine component can be determined.

Each of the determining units may determine whether or not a defect signal component contained in the sensor waveform deviates from a predefined range and, in the event that the defect signal has been determined as deviating from the predefined range, determines the presence of a defect waveform abnormality as the abnormality in the sensor waveform.

Since determination of whether or not a defect signal component contained in the sensor waveform deviates from the predefined range makes it clear if the sensor waveform contains an abnormality, a simple process is sufficient to accomplish such determination. Comparison between the defect signal component and the predefined range may be effected to any of the amplitude, the signal width, the phase appearing in the defect signal and others, but if it be effected to the amplitude, a simple process is sufficient to accomplish such comparison with high accuracy. The predefined range referred to above may not be always limited to a single range, but may be a plurality of stepwise varying ranges. Determination of whether or not it has deviated from the predefined range may be such as determination of whether or not it has deviated from a standard value.

Each of the determining units may be of a type capable of comparing sensor waveform main signal cycles of the plural sensors connected therewith and, in the event that the main signal cycle is not found within a predefined range, determining the presence of a rotation abnormality as the abnormality in the sensor waveform.

In the case of a bearing, the main signal cycle of the sensor wave is represented by the cycle of rotation of the bearing. Accordingly, by performing a relative comparison of the main signal cycles of the sensor waveforms, one of the machine components in which rotation is retarded can be found. If in the machine component which ought to rotate at the same number of revolutions a difference occur in number of revolution, it is clear that the machine component of which rotation is retarded has an abnormality in any way whatsoever. Determination of the presence or absence of the rotation abnormality and the determination of the presence or absence of the defect waveform described above can be performed by the same determining unit using the same sensor waveforms.

Each of the determining units may have a capability of detecting presence or absence of a determiner abnormality, which is an abnormality resulting from the respective determining unit itself, and a sensor waveform abnormality resulting from the sensor waveform. The sensor waveform abnormality includes the above described defect waveform abnormality and the rotation abnormality. The determiner abnormality includes, for example, a communication abnormality occurring in communication between the control means and any one of the determining units, a parameter abnormality which occurs when a process set-up condition for setting a parameter to the determining unit is improper, a function abnormality occurring in a central processing unit forming the determining units and so on. Thus, the provision of the capability of detecting the determiner abnormality allows a quick remedy to be taken to the determiner abnormality, thereby avoiding the erroneous determination taking place continually.

The control means may be of a design capable of making a transmission request sequentially to the determining units and each of the determining units transmits a result of determination to the control means in response to the transmission request. In other words, the results of determination are collected on a polling control.

With the polling control, collection of the results of determination performed by the plural determining units can be efficiently carried out simply by the control means. Also, each of the determining units is sufficient if it can respond to the transmission request and, therefore, a simple communication function is sufficient.

The control means may have a capability of commanding setting and changing of the process set-up condition for each of the determining units and each of the determining units is capable of changing the process set-up condition according to the command from the control means.

By allowing the control means to have, in addition to the capability of collecting the results of determination, a capability of commanding setting and changing of the process set-up condition for each of the determining units, the process set-up condition for each of the plural determining units can be easily set and changed.

Each of the determining units may have a plurality of waveform processing means for processing the sensor waveform according to different waveform processing techniques and has a capability of selecting one of the waveform processing means that is to be used for processing the sensor waveform. In such case, the control means may have a capability of applying a selection command necessary to select one of the waveform processing means for the particular determining unit.

It often occurs that depending on the type, specification and condition of use of the machine components, a waveform processing technique appropriate to detect the presence of an abnormality in the sensor waveform may vary. For this reason, where each of the determining units is provided with waveform processing means having different waveform processing techniques, the respective determining unit can suit to the different types, specifications and conditions of use of the machine components when one of the waveform processing means is selected in response to the selection command from the control means, thereby achieving a versatility. Also, selection of one of the waveform processing means to be used can easily be performed. It is however to be noted that determination may be made by processing the inputted sensor waveform by means of the plural waveform processing means.

Each of the determining units may have a plurality of waveform processing means for processing the sensor waveform according to different waveform processing techniques and has a capability of selecting one of the waveform processing means for each of the sensors.

It often occurs that the waveform processing method of the sensor waveform may vary with the type of the machine components. Also, even though the machine components have the same specification, the condition of use thereof such as, for example, a load condition or a thermal condition may vary depending on the location where the machine system is installed and, due to the difference in condition of use, the waveform processing method appropriate to the sensor waveform may vary. For this reason, each of the determining units selects one of the waveform processing means for each sensor so that the proper waveform processing can be performed with respect to the machine components with the use of the same determining units to determine the presence or absence of an abnormality.

It is, however, to be noted that each of the determining unit preferably has a capability of setting a different process set-up condition for each of the sensors regardless of whether or not it has a plurality of waveform processing means of different waveform processing techniques.

Wiring used to connect the determining units and the associated sensors is preferably used in the form of a sheathed sensor cable having a sheath having a water proof, a dust proof, a rust proof, a moisture proof, and resistances to oil, heat and electromagnetic noises.

As is well known to those skilled in the art, the machine components having the rolling elements, such as roll support bearings or the like that are used in a continuous casting apparatus, an iron work apparatus or any other machine system are often used under environment full of moisture, dusts, vapor, oil and others, and yet under a high temperature condition. Accordingly, the use of the sheathed sensor cable of the kind discussed above can withstand those severe conditions. In this connection, each of the determining unit is also preferred to be of a kind in which electronic component parts are encased within a casing that similarly has a water proof, a dust proof, a rust proof, a moisture proof, and resistances to oil, heat and electromagnetic noises.

Each of the determining units may have a relay terminal so that the determining units can be sequentially wired together through the respective relay terminals.

When the determining units are connected in cascade with each other through the relay terminals, the wiring can be simplified. In the machine system, it is often experienced that the wiring is difficult to achieve and/or tends to constitute an obstruction. Accordingly, the cascade connection of the determining units makes it possible to achieve the wiring in the machine system.

Where the machine system is a aggregation of a plurality of machine system constituent elements each including the plural machine components, each of the determining units may be used one for each of the machine system constituent elements and the sensor connected with each of the determining units may be arranged on the machine component provided in one of the machine system constituent elements that is associated with such determining unit.

The machine system comprised of the machine system constituent elements is generally so designed and so configured that for servicing purpose each of the machine system constituent elements can be detachable independent of the other. For this reason, the provision of the determining unit for each of the machine system constituent elements makes it possible to facilitate wiring or any other processing of the determining units and the sensors. The machine constituent elements referred to above may be the one referred to as a segment.

The control means may have an automatic monitoring mode and a terminal operated mode. The automatic monitoring mode is a mode in which a result of determination performed by each of the determining units is acquired by sequentially issuing a transmission request to request the respective determining unit to send the result of determination, whereas the terminal operated mode is a mode in which by making a transmission request to request the respective determining unit to send the result of determination and information other than the result of determination a response thereto is acquired. These two modes may be generally used in such a manner that while the control means is at all times set in the automatic monitoring mode to collect the results of determination, the terminal operated mode is used when the necessity occurs to secure various information from each of the determining units.

Each of the determining units may capture as digital data the sensor waveform which is the output signal from each of the sensors connected therewith, and in such case the control means includes a waveform data storage means for storing the sensor waveform that is the digital data captured by each of the determining units.

In addition to the determination of the machine component performed by each of the determining units, the provision of the waveform data storage means in the control means makes it possible to ascertain a trend of the phenomenon of occurrence of the sensor waveform up until they lead to the occurrence of the abnormality in the machine component, by analyzing the stored results of the sensor waveforms, for example, by analyzing the plurality of the sensor waveforms that led to the presence of an abnormality in some of the machine components. Also, by storing the sensor waveforms as the digital data, the data are substantially free from deterioration and the accurate sensor waveform can be reproduced.

In a preferred embodiment of the present invention, a maintenance information generating means is employed for generating predetermined maintenance information associated with the machine component, based on a result of determination performed by each of the determining units. The maintenance information may include, for example, information on the time at which some or all of the machine components are to be replaced and/or the time on which the machine components are to be ordered with the manufacturer.

In another preferred embodiment of the present invention, information processing means may be positioned at a location remote from the control means and connected with the control means through a communication network. In this case, the control means may have a capability of collecting not only a result of determination performed by each of the determining units, but also a sensor waveform inputted to each determining unit. The information processing means may include a remote data collecting means for collecting the result of determination and the sensor waveform which the control means has collected from each of the determining units.

Where the remote data collecting means is used so that the results of determination and the sensor waveforms can be collected at a remote location, expert technicians of the manufacturer of the machine components can easily perform a detailed analysis of the states of the machine components and the trend of the phenomenon of occurrence of the sensor waveform.

In a further preferred embodiment of the present invention, a combined sensor and determiner unit of the following structure is employed.

This combined sensor and determining unit is used in a machine system including a plurality of machine components each having rolling elements, which unit includes a plurality of sensors each arranged on the respective machine component for detecting an influence signal resulting from passage of the rolling element induced in the respective machine component; and a plurality of determining units each including a filtering means for extracting a component of a defect signal from a sensor waveform that is an output signal from the sensor connected with such determining unit, and a determining section operable to compare the detected defect signal with a predefined range to determine presence or absence of an abnormality. The filtering means is operable to extract the defect signal component by repeatedly performing at predetermined interval a process of retrieving a predetermined time range data from a data stream of the sensor waveform and determining a difference between maximum and minimum values of the retrieved data.

Thus, by causing the filtering means provided in each of the determining units to extract the defect signal component from the sensor waveform and then comparing the extracted defect signal with the predefined range, not only can the defect signal be extracted in a simple manner, but the determination of the waveform abnormality can easily performed with high accuracy. Also, since as a method of extracting the defect signal component, the non-linear filtering in which the difference is determined between the maximum and minimum values is employed, no product-sum operation is needed and the defect signal can be relatively easily extracted.

In a still further preferred embodiment, the present invention makes use of a determining unit of the following structure is employed. Specifically, the determining unit of the present invention includes a selector for sequentially changing one of a plurality of input channels to which analog sensor waveform signals are inputted, an A/D converting means for performing an A/D conversion on an output from the selector, a first memory for storing the waveform signal which has been A/D converted, a processor for waveform processing the waveform signal, stored in the first memory, according to a process set-up condition and performing a predetermined determination from a result of waveform processing according to a predefined range, a second memory for storing the result of the waveform processing and the result of determination process performed by the processor, and an interface section for transmitting contents stored in the first and second memories in response to a request command applied thereto from an external circuit.

With the determining unit of the above described structure, the waveform processing results of the sensor waveforms stored in the second memory and the sensor waveforms before the waveform processing that are stored in the first memory can be arbitrarily read out through the interface unit.

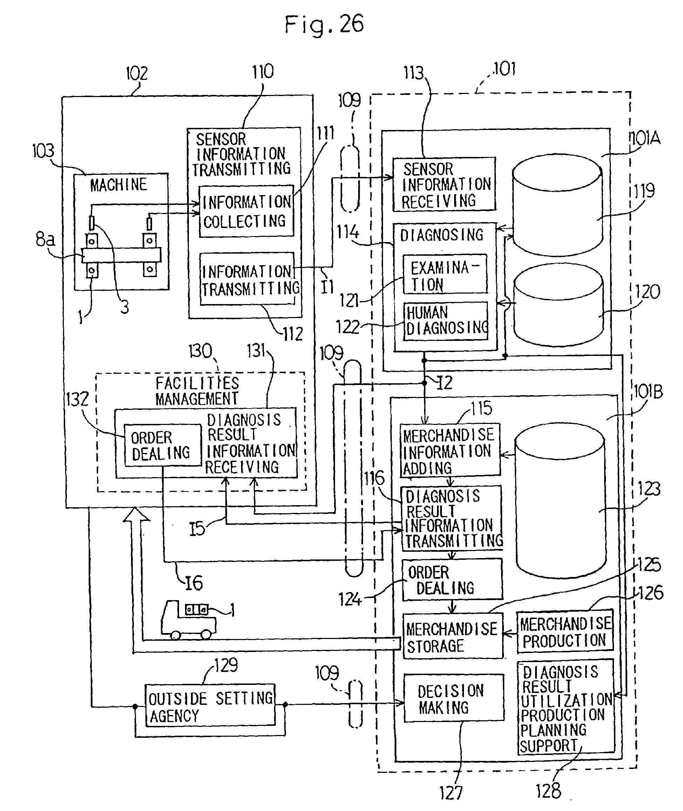

To facilitate a better understanding of the monitoring and diagnosing system and the monitoring, diagnosing and selling system both according to the present invention, they will be described with the aid of reference numerals used in Fig. 26.

A machine component monitoring and diagnosing system according to an aspect of the present invention is for monitoring and diagnosing a machine component (1) having rolling elements. This machine component monitoring and diagnosing system includes a sensor (3) for detecting a factor associated with lifetime of a machine component (1) incorporated in a machine (103) used at a business establishment (102) of a client corporation; a sensor information transmitting means (110) for transmitting information (I1) detected by the sensor (3) or information processed with such information (I1) to a line (109); a sensor information receiving means (113) installed at a business establishment (101) of a manufacturing and selling corporation, which manufactures and sells the machine component (1), for receiving the sensor information (I1) transmitted through the line (109); a diagnosing means (114) for diagnosing a state of the lifetime of the machine component (1) in reference to the sensor information (I1) received by the sensor information receiving means (113); a diagnosis result information transmitting means (116) for transmitting diagnosis result information given by the diagnosing means (114) to the line (109); and a diagnosis result information receiving means (131) installed at the business establishment (102) of the client corporation for receiving the diagnosis result information transmitted through the line (109).

According to this aspect of the present invention, the factor associated with the lifetime of the machine component (1) used in the machine (103) located at the client corporation is detected by the sensor (3), and the sensor information (I1) therefrom is transmitted to the diagnosing means (114) at the manufacturing and selling corporation through the line (109). The term "lifetime" herein used for the purpose of the present invention is intended to encompass not only the natural lifetime resulting from a proper use, but also the lifetime resulting from an abnormality such as material collision or the like. The diagnosing means (114) diagnoses the status of the lifetime of the machine component (1) based on the received sensor information (I1). The diagnosis result information brought about as a result of the diagnoses by the diagnosing means (114) is transmitted to the client corporation (102) through the line (109). Because of this, the machine component (1) provided in the client corporation can be diagnosed by the diagnosing means (114) installed at the business establishment (101) of the manufacturing and selling corporation at a remote location. The manufacturing and selling corporation is an exclusive manufacturer of the machine components (1). Since the manufacturing and selling corporation handles a large amount of the machine components and, therefore, there should be no waste even though the manufacturing and selling corporation possesses a highly accurate and precision diagnosing instruments with a relatively large amount of information, an accurate diagnosis is possible to achieve. Accordingly, the client corporation utilizing the machine components (1) can expect an accurate diagnosis, a proper stock, replacement and budget planning. Also, the manufacturing and selling corporation of the machine components (1) can foresee the expected order and can therefore reduce the stock.

According to another aspect of the present invention, there is provided a machine component monitoring and diagnosing system for monitoring and diagnosing a machine component having rolling elements. This monitoring and diagnosing system includes a sensor information receiving means (113) installed at a business establishment (101) of a manufacturing and selling corporation manufacturing and selling the machine component (1) for receiving through a line (109) information detected by a sensor (3) for detecting a factor associated with lifetime of the machine component (1) incorporated in a machine (103) used by a client corporation located at a remote place; a diagnosing means (114) for diagnosing a state of the lifetime of the machine component (1) in reference to the sensor information (I1) received by sensor information receiving means (113); and a diagnosis result information transmitting means (116) for transmitting information on a result of diagnosis by the diagnosing means (114) to the line (109).

The sensor information transmitting means (110) may be of a type including an information collecting section (111) for collecting the information detected by each of sensors (3) provided one for each of a plurality of machine components (1), and an information transmitting section (112) for transmitting the information, collected by the information collecting section (111), to the line (109).

The provision of the information collecting section (111) in the sensor information transmitting means (110) is effective to allow the information of the sensor (3) installed for each of the machine components (1) to be transmitted efficiently and effectively.

The diagnosis result information brought by the diagnosing means (114) referred to above may include a result of determination of whether or not the machine component (1) is properly usable and a result of determination of an available term of use if the machine component (1) has been determined usable properly.

To secure the result of determination as to the term during which the machine component can still be usable, the client corporation utilizing the machine component (1) can perform a proper inventory control, a proper replacement and a budget planning. Also, the manufacturing and selling corporation can easily foresee the demands. The term during which the machine component can still be usable can be expressed in various forms and may be expressed in terms of the length of usable time or the time of replacement in which conditions of use are taken into consideration.

The sensor (3) in this aspect of the present invention may be of a type operable to detect at least one of vibration waveform, temperature and image.

Where the sensor (3) is of a type capable of measuring the vibration waveform, the lifetime can be diagnosed based on the waveform analysis or frequency analysis from the sensor information. The temperature information is such that since if the machine component 1 is normally operating, there is a limited temperature range, the lifetime can be diagnosed by comparing with it. The image information can give information on color change or degradation or impairment appreciably appearing in the machine component.

The diagnosing means (114) may be of a type utilizing, for diagnosis, a database (119) in which specifications for each type of the machine components (1) and examples of diagnosis are registered.

When the database (119) in which specifications for each type of the machine components (1) are registered is used for diagnosis, a variety of machine components (1) can be diagnosed. Also, when the database (119) in which examples of diagnosis are registered is used for diagnosis, the accuracy of the diagnosis and increase of the reliability can be expected. The lifetime diagnosis of the machine components (1) is difficult with a theoretical judgment and, therefore, the utilization of the examples of diagnosis similar to the sensor information if available is effective to increase the accuracy of diagnosis. The database (119) referred to above may have registered therein, for example, only predetermined results of diagnosis selected out from the results of diagnosis performed by the diagnosing means (114) or results of diagnosis specified by human inputting. Also, the database (119) may have registered therein differences between the results of diagnosis and the actual results if they can be found.

The diagnosing means (114) may be of a type utilizing for diagnosis a database (120) in which environments of use of the machine components (1) are registered.

By utilizing the environments of use of the machine components (1), registered in the database (120), to the diagnosis, the accuracy of diagnosis and the reliability can further be increased. Also, utilization of the environments of use to the diagnosis is effective in that where as the result of diagnosis the available term of use is desired to be indicated, information on the lifetime can be displayed in which a way that the lifetime may reach on what day of what month of what year.

The diagnosing means (114) may be of a type including an examining section (121) for automatically performing, when the sensor information (I1) is in putted, determination of whether or not at least the machine component (1) is properly usable, and a human diagnosing means (122) for adding a result of diagnosis performed by a human to the result of diagnosis performed by the examining section (121) or modifying it based on the result of diagnosis performed by a human.

If diagnosis of the lifetime of each of the machine components (1) were to be performed by a machine, it often occurs that not only is a relatively large amount of information needed, but also determination would be impossible in a special case. Diagnosis with human eyes and/or ears is effective as a means for diagnosing the mechanical components (1) such as bearings and, therefore, by adding the result of diagnosis performed by a human to the result of diagnosis performed by the examining section (121) or modifying it based on the result of diagnosis performed by a human is particularly effective to increase the accuracy of diagnosis.

Each of the sensor information transmitting means (110) and the sensor information receiving means (113) may be of a type capable of performing a bi-directional communication, in which case the sensor information transmitting means (110) can transmit the sensor information (I1) in response to a request signal from the sensor information receiving means (113).

Where the sensor information (I1) is transmitted in response to the request command, management of the time at which the information is made available can be performed by the sensor information receiving means (113) in the business establishment (101) of the manufacturing and selling corporation. For this reason, the labor which would be required on the part of the client corporation to perform such management can be lessened. Also, even where the sensor information (I1) from the plural client corporations is to be diagnosed with the same diagnosing means (114), concentration of the traffic can be avoided to allow the diagnosing means (114) to be utilized efficiently.

The sensor information transmitting means (110) may be of a type capable of transmitting the sensor information (I1) on a regular basis and, also, transmitting it even when a predetermined abnormality signal is received.

As such if the sensor information (I1) is transmitted on a regular basis, proper lifetime monitoring can be performed at all times. Also, when the sensor information (I1) is transmitted upon receipt of the abnormality signal, a quick diagnosis is possible particularly where any possible damage to the mechanical component resulting from a defect in operation of the machine can be expected. The abnormality signal referred to above may be an emergency halt signal or the like generated in a control device of the machine utilizing the machine components (1).

The machine (103) in the business establishment (102) of the client corporation may be a machine having a plurality of shafts (8a), and the machine component (1) to be detected by the sensor (3) may be a bearing supporting each of the shafts (8a). In this case, the sensor information transmitting means (110) transmits the sensor information (I1) on these plural bearings to the line (109).

Where the lifetime monitoring is subjected to the bearings in the machine (103) having the plural shafts (8a), since the number of the machine components (1) to be monitored is too many, transmission and diagnosis of the sensor information (I1) can be performed efficiently, resulting in reduction in cost which would be incurred in information transmission and diagnosis. Also, in the case of the bearings, diagnosis is possible with reference to the vibration waveform and/or the temperature information and, therefore, it is suited for the diagnosis at a remote place.

A machine component monitoring, diagnosing and selling system according to the present invention makes use of the monitoring and diagnosing system of any of the structures described hereinbefore. Specifically, the machine component monitoring, diagnosing and selling system additionally includes a merchandise information adding means (115) for generating merchandise information associated with the machine component (1) to be diagnosed according diagnosis result information of the diagnosing means (114) and for adding this merchandise information to the diagnosis result information. The diagnosis result information transmitting means (116) transmits merchandise information added diagnosis result information which is the diagnosis result information added with the merchandise information.

In this structure, the client corporation can receive the merchandise information on the machine components (1) simultaneously with the accurate results of diagnosis of the machine components (1) and can, therefore, make a quick order and delivery along with reduction in expenditures necessary in performing monitoring and diagnosing the machine components (1). On the other hand, the manufacturing and selling corporation of the machine components (1) can reduce the stock and set up a proper production planning in anticipation of the advance order made by the client corporation. Also, the time required to move persons for business consultation will become no longer necessary.

The merchandise information added by the merchandise information adding means (115) is preferably of a type including price information and delivery date information.

If the price information and the delivery date information can be known together with the results of diagnosis of the lifetime, the corporation utilizing the machine components (1) can draft a budget at a time for replacement or make a budget planning.

Each of the diagnosis result information transmitting means (116) and the diagnosis result information receiving means (131) preferably has a capability of performing a bi-directional communication through the line (109), and the merchandise information added diagnosis result information transmitted by the diagnosis result information transmitting (116) may include information asking about the will to order the machine components (1) and the diagnosis result information receiving means (131) may be of a type capable sending agreement information with respect to the information asking about the will to order contained in the merchandise information added diagnosis result information.

If the diagnosis result information includes not only the merchandise information, but also the estimate information including information asking about the will to order, the order can be placed only in response to the estimate information. Because of this, the order placement is simple.

The diagnosis result information receiving means (131) may transmit the agreement information all at a time in response to the plural merchandise information added diagnosis result information received.

It is also to be noted that the diagnosis result information transmitting means (116) may also transmit the merchandise information added diagnosis result information associated with the plural machine components (1) all at a time.

Transmission of the agreement information or the merchandise information added diagnosis result information all at a time is effective to speed up the order placement and the ordering process.

In a still further preferred embodiment of the present invention, an order processing means (124) may be employed for generating arrangement information of delivery of the machine component (1) according to contents ordered in the agreement information (16) that is received by the diagnosis result information transmitting means (116).

The use of the order processing means (124) for generating arrangement information of delivery of the machine component (1) according to contents ordered in the agreement information (I6) facilitates the order processing.

In a still further preferred embodiment of the present invention, an electronic decision making means (127) may be employed for making a decision according to electronic information in dependence on contents of the order contained in the agreement information (16) received by the diagnosis result information transmitting means (116).

The use of the electronic decision making means (127) for making a decision according to electronic information in dependence on contents of the order contained in the agreement information (I6) is effective to further facilitate an overall processing incident to sales.

In a yet preferred embodiment of the present invention, a diagnosis result utilizing production planning support means (128) may be employed which utilizes the diagnosis result of the diagnosing means (114) in planning a production of the machine component (1).

The use of the diagnosis result utilizing production planning support means (128) which utilizes the diagnosis result of the diagnosing means (114) in planning a production of the machine component is effective to facilitate an efficient production planning.

The present invention also provides a machine component monitoring and diagnosing method for monitoring and diagnosing a machine component having rolling elements through a computer network. This method includes, at a business establishment (101) of a corporation manufacturing and selling the machine component (1):
a process of receiving through a line (109) information (I1) detected by a sensor (3) for detecting a factor associated with lifetime of a machine component (1), incorporated in a machine (103) used by a client corporation at a remote location;
a process of diagnosing a status of lifetime of the machine component (1) based on the received sensor information (I1) by using an examining section (121); and
a process of transmitting diagnosis result information, obtained as a result of diagnosis, to the client corporation through the line (109).

In the practice of the machine component monitoring, diagnosing and selling method, a process may be additionally employed of generating merchandise information associated with the machine component (1) to be diagnosed in dependence on diagnosis result information obtained as a result of the diagnosis and transmitting the diagnosis result information together with the merchandise information to the client corporation through the line (109).

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like components throughout the several views, and:
Fig. 1 is a system diagram showing a machine component monitoring system according to one embodiment of a monitoring system of the present invention;
Fig. 2 is a side view showing one example of a machine system utilizing the monitoring system shown in Fig. 1;
Fig. 3 is a sectional view showing a relationship between the machine components and the sensors used in the machine system shown in Fig. 2;
Fig. 4 is an explanatory diagram showing an example in which wireless transceivers are used in the monitoring system shown in Fig. 2;
Fig. 5 is an explanatory diagram showing an example of a cable connection of the monitoring system shown in Fig. 2;
Fig. 6 is a diagram showing a sensor waveform;
Fig. 7 is an explanatory diagram showing a relationship between the sensor waveform and a data extracting time interval of a non-linear filtering process;
Fig. 8 is a block diagram showing the structure of determining units;
Fig. 9 is an explanatory diagram showing a hardware structure of each of the determining units;
Fig. 10 is a block diagram showing a conceptual structure of each of the determining units;
Fig. 11 is a flowchart showing the sequence of a process of determination performed by each of the determining units;
Fig. 12 is an explanatory diagram showing a communication conception of commands and responses between each of the determining units and a control means;
Fig. 13 is an explanatory diagram showing a conception of a processing of the commands and responses in the control means;
Fig. 14A is a conceptual diagram showing an automatic monitoring mode of the controller;
Fig. 14B is a conceptual diagram showing a terminal operated mode of the controller;
Fig. 15 is an explanatory diagram showing a schematic structure of the controller;
Fig. 16 is a block diagram showing a conceptual structure of the controller;
Fig. 17A is a diagram showing a hardware structure applicable where the controller is installed in a monitoring room;
Fig. 17B is a diagram showing the hardware structure applicable where the controller is installed in a plant;
Fig. 18 is a block diagram showing a conceptual structure of an information processing device connected to the controller;
Fig. 19 is a conceptual diagram showing mainly a terminal executable application software in the information processing device;
Fig. 20 is an explanatory diagram showing a specific example of a process performed by the terminal executable application software in the information processing device;
Fig. 21 is an explanatory diagram showing an example of development of the machine component monitoring system according to the embodiment of the present invention;
Fig. 22 is a sectional view of constant speed joints providing another example of the machine components to be monitored;
Fig. 23 is a sectional view of a ball screw mechanism providing a further example of the machine component to be monitored;
Fig. 24 is an explanatory diagram showing a genetic conception of one embodiment of a monitoring, diagnosing and selling system of the present invention;
Fig. 25 is an explanatory diagram showing a medium conception of the monitoring, diagnosing and selling system;
Fig. 26 is a block diagram showing a conceptual structure of the monitoring, diagnosing and selling system;
Fig. 27 is a block diagram showing an multi: 1 connection of the monitoring, diagnosing and selling system;
Fig. 28 is an explanatory diagram of a hardware structure of the monitoring, diagnosing and selling system;
Fig. 29A illustrates the case in which transmission and receipt of the sensor information between a client corporation and a manufacturing and selling corporation take place at all times;
Fig. 29B illustrates the case in which transmission and receipt of the sensor information between a client corporation and a manufacturing and selling corporation take place on a regular basis;
Fig. 29C illustrates the case in which transmission and receipt of the sensor information between a client corporation and a manufacturing and selling corporation take place in response to a transmission request;
Fig. 30A is an explanatory diagram showing contents of the sensor information in the monitoring, diagnosing and selling system;
Fig. 30B is an explanatory diagram showing contents of diagnosis result information in such monitoring, diagnosing and selling system;
Fig. 30C is an explanatory diagram showing contents of merchandise information added diagnosis result information in such monitoring, diagnosing and selling system;
Fig. 30D is an explanatory diagram showing contents of order information in such monitoring, diagnosing and selling system;
Fig. 31 is an explanatory diagram showing contents of a group of merchandise information added diagnosis result information in the monitoring, diagnosing and selling system;
Fig. 32 is an explanatory diagram showing a structure of machines including the machine components to be monitored and diagnosed; and
Fig. 33 is an explanatory diagram showing an example of arrangement of the sensors and the machine components to be monitored and diagnosed.

### DETAILED DESCRIPTION OF THE EMBODIMENTS

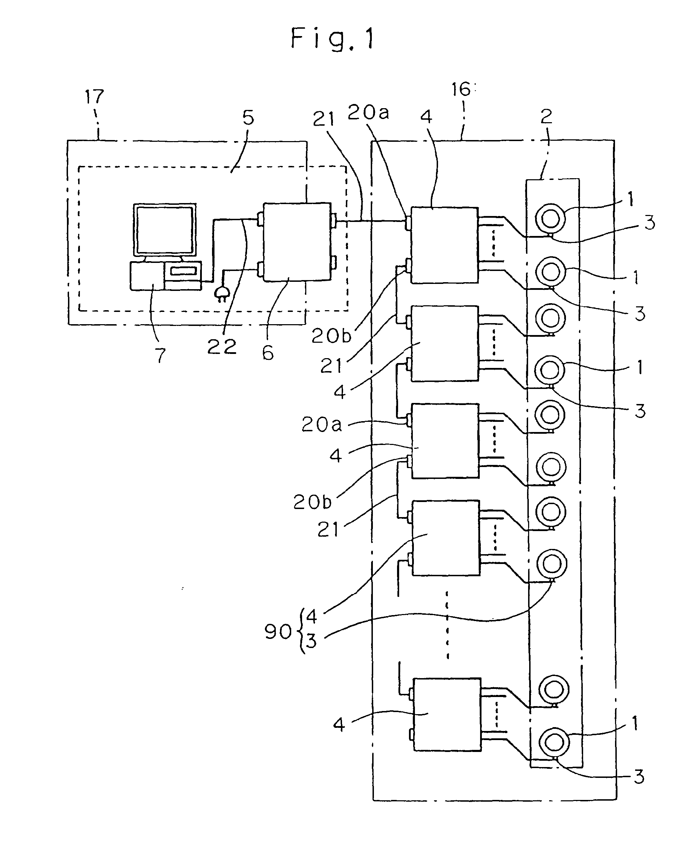

Preferred embodiments of the present invention will now be described with reference to the accompanying drawings. Shown in Fig. 1 is a monitoring system embodying the present invention, which is used for monitoring a plurality of machine components 1 employed in a machine system 2 and including rolling elements. This monitoring system includes a plurality of determining units 4 each electrically connected with a plurality of sensors 3 and a control means 5 common to and electrically connected with the determining units 4. The sensors 3 are installed one for each of the machine components 1 and positioned in the vicinity of the respective machine component 1. Each of the determining units 4 is operable in response to an output signal from the sensors 3 that are connected therewith to determine the status such as, for example, the presence or absence of an abnormality and/or the lifetime of the machine components 1, associated with such sensors 3, according to a predetermined process set-up condition. The control means 5 has a capability of collecting results of determination performed by the determining units 4 and, also, a capability of issuing a setting commands or the like to each of the determining units 4 and includes an electric power unit for feeding an electric power to all of those determining units 4. This control means 5 may be a stand-alone instrument, but in the illustrated embodiment the control means 5 is comprised of a dedicated controller 6 and a general purpose information processing device 7 such as, for example, a personal computer for collecting data or other functions. Each of the determining units 4 and the associated sensors 3 altogether constitute a sensing/determining unit 90.

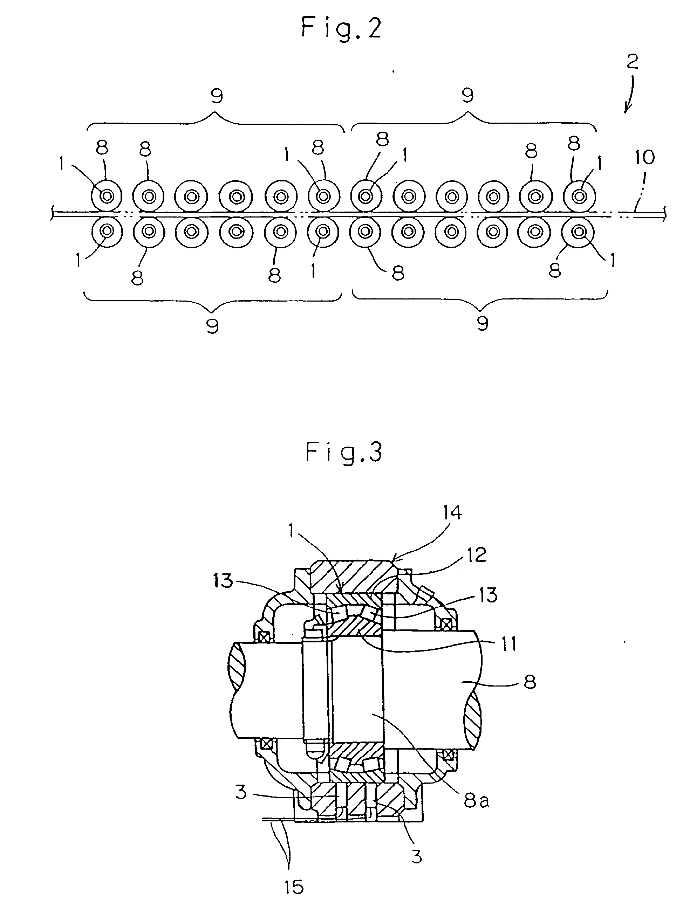

The machine system 2 may include, for example, a plurality of rolls 8 as shown in Fig. 2, each of which rolls 8 is rotatably supported at its opposite ends by the machine components 1 that are employed in the form of rolling bearings. The rolls 8 are grouped into a plurality of sets of machine system constituents 9 each set including a plurality of rolls 8 arranged on a common constituent frame (not shown). Each set of the machine system constituents 9 are detachably mounted on a machine framework (not shown) of the machine system 2. In the illustrated embodiment, each machine system constituent 9 includes a plurality of, for example, eight rolls 8 and is referred to as, for example, a segment or the like. The machine system 2 is, for example, a rolling apparatus with the rolls 8 serving as rolling rolls. The rolls 8 are positioned in upper and lower rows and a steel material 10 is rolled between the upper and lower rows of the rolls 8 as it is transported along a transport path defined between the upper and lower rows of the rolls 8. The machine system constituents 9 are provided for each of the upper and lower rows with the neighboring rolls 8 constituting a single machine system constituent 9. Where the machine system 2 is constituted by the plural machine system constituents 9 such as described above, the determining units 4 are provided one for each of the machine system constituents 9, and the sensors 3 connected with each determining unit 4 are positioned one for each of the machine components 1 of the associated machine system constituent 9

Each of the machine components 1 in the form of the rolling bearings includes, as shown in Fig. 3, an inner race 11, an outer race 12 and a plurality of rolling elements 13 retained by a retainer (not shown) and interposed between the inner and outer races 11 and 12. In the illustrated example, each machine component 1 is a double row bearing, more specifically, a double row aligned roller bearing. Each machine component 1 in the form of a rolling bearing has the outer race 12 fixed to a housing 14 and the inner race 11 mounted on a roll shaft 8a of the respective roll 8.

Each of the sensors 3 is of a kind capable of detecting, and outputting a sensor signal indicative of, any influence brought about by passage of the rolling elements 13 in the respective machine component 1, for example, a change in strain, load or vibration or the like induced at a predetermined location of the respective machine component 1. In the practice of the present invention, for each of the sensors 3, any sensor may suffice provided that it can detect an influence signal that may bring about a defective signal in a passage signal of the rolling elements 13. By way of example, each sensor 3 may be employed in the form of a piezoelectric sensor, an optical displacement sensor or a strain gauge, but in the illustrated embodiment the piezoelectric sensor is shown as employed for each sensor 3.

Each sensor 3 is fitted to the associated machine component 1. Where each machine component 1 is a rolling bearing of which the inner race is rotatable, the associated sensor 3 is mounted on an outer diametric surface of the outer race 12. Also, where each machine component 1 is a double row bearing, each sensor 3 is installed for each row as shown. Wiring 15 from each sensor 3 extends within a cutout groove or the like in the housing 14 and is then drawn out of the housing 14. The wiring 15 connected with each sensor 3 is preferably employed in the form of a sensor cable having a protective sheath that is water-proof, dust proof, rust proof, moisture proof, oil resistant, heat resistant and resistant to electromagnetic noises.

Referring to Fig. 1, the determining units 4 are disposed in the vicinity of the machine system 2 and are accordingly located within a machine room 16 in a plant where the machine system 2 is installed. The control means 5 is located within a monitoring room 17 which may be at a location remote from the machine room 16 in the plant, or within the machine room 16 if so desired. Where the control means 5 is comprised of the dedicated controller 6 and the general purpose information processing device 7, the controller 6 may be installed within the machine room 16 and the information processing device 7 may in such case be installed within the monitoring room 17.

Each of the determining unit 4 has relay terminals 20a and 20b, and these determining units 4 are sequentially connected with the controller 6 through the relay terminals 20a and 20b. The relay terminals 20a and 20b are connected with each other, and each of these relay terminals 20a and 20b has a signal and power terminal portions (not shown). For wiring 21 used to connect the determining units 4 with each other and also to connect the determining unit 4 with the controller 6, a device network cable is employed. The device network cable is generally known as a cable used to connect appliances for bus communication and, at the same time, to supply an electric power among the appliances. This wiring 21 is used in the form of a bus system allowing a plurality of appliances to share a common transmission line. The use of the bus system makes it possible to minimize the number of transmission lines. More specifically, the half duplex transmission system such as, for example, RS-485 is used therefor. Although the full duplex transmission may be equally employable, the use of the half duplex transmission system is preferred so that the number of the transmission lines can be minimized and in view of the size of a load on transmission processing.

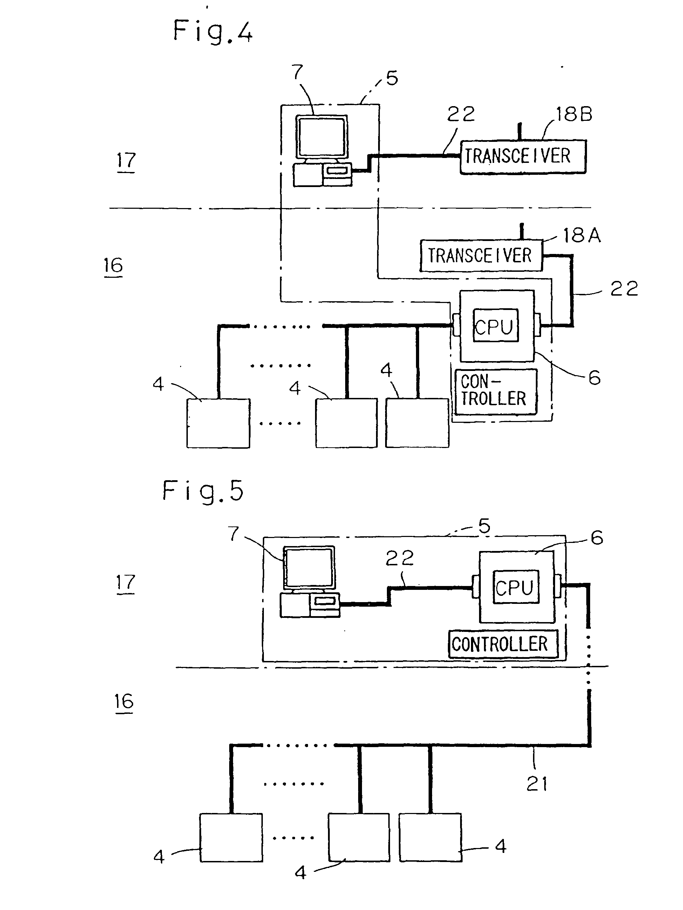

Wiring 22 used to connect between the controller 6 and the information processing device 7 is employed in the form of a serial transmission cable such as, for example, a standard RS-232C transmission cable. The controller 6 and the information processing device 7 are connected with each other wireless with the use of wireless transceivers 18A and 18B as shown in Fig. 4. The use of the wireless transceivers 18A and 18B enables the controller 6 and the information processing device 7 to be installed at respective locations separated from each other, that is, within the machine room 16 and the monitoring room 17, respectively. Fig. 5 illustrates a system layout in which the controller 6 and the information processing device 7 are connected by means of the cable and are, hence, installed within the monitoring room 17.

Referring back to Fig. 1, a brief discussion will be made of the function of each of the determining units 4 and the control means 5. Each of the determining units 4 processes an output signal from each of the sensors 3 according to a processing set-up condition to determine the presence or absence of an abnormality in the waveform of the sensor signal. The processing set-up condition and a result of determination are accessed by a command from the control means 5 that is connected therewith through a bus line. In other words, the processing set-up condition is rewritten through a terminal of the control means and the result of determination is outputted through a terminal of the control means 5. The number of the determining units 4 that can be connected with the control means 5 is, for example, a few tens of units, and the determining units 4 are uniquely identified by respective IDs (identification information) each being set by setting a dip switch (not shown) mounted on a circuit substrate of each determining unit 4.

The controller 6 of the control means 5 makes use of a communication function to automatically collect statuses, abnormality information and others of each of the determining units 4 that are bus-connected therewith. The controller 6 is also connected with the information processing device 7 for collecting the data and performs a command processing by means of a terminal operation from the information processing device 7. Where the controller 6 is installed in the vicinity of the machine system 2, the controller 6 preferably has a water-proof and heat-resistant structure.

The information processing device 7 collects through the controller 6 data on the sensor waveform acquired by each of the determining units 4. The collected data are processed through a general purpose processing application software and visualized. The information processing device 7 is started up only when the necessity arises to collect the data and also to make reconfirmation.

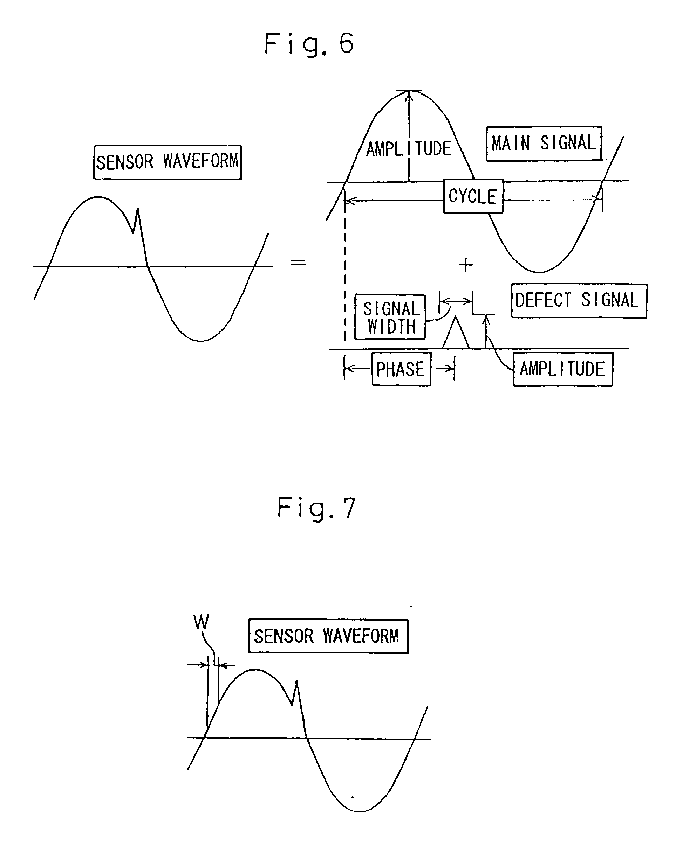

Hereinafter, various component parts of the monitoring system will be discussed. In the first place, the sensor waveform will be described. The waveform of the output signal from each of the sensors 3 fitted to the machine component 1 is shown in Fig. 6. This sensor waveform contains a main signal and a defect signal. The main signal is a waveform that appears sinusoidally at a predetermined cycle incident to passage of the rolling elements. A high frequency noise component included in the sensor output signal will be considered as included in the main signal. The detect signal is a signal component other than the main signal that appears as a result of flaking on a rolling surface and generally represents a waveform of a triangular spike. In other words, the sensor signal waveform corresponds to the waveform of the main signal superposed with the defect signal.

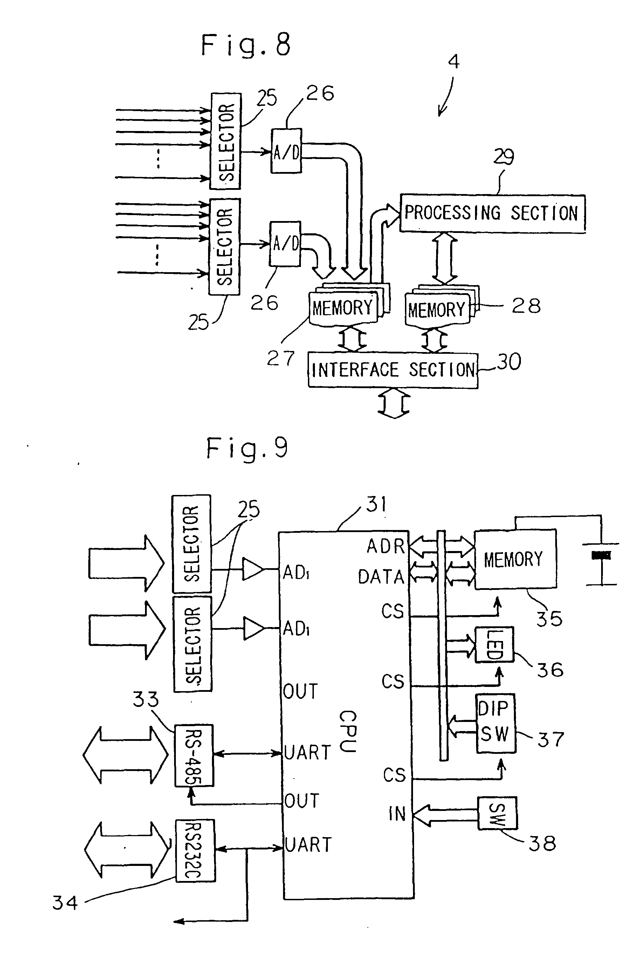

Fig. 8 illustrates the structure of each of the determining units 4. The respective determining unit 4 includes a selector 25 for sequentially selecting one of sensor input channels, an analog-to-digital (A/D) converting means 26 for converting an output from the selector 25 into a digital waveform signal, a first memory 27 for storing the digital waveform signal outputted from the A/D converting means 26, a processor 29 for processing the waveform signal, stored in the first memory 27, according to a set-up processing condition, that is, a predetermined condition and also for performing a predetermined determination according to a predefined range with respect to a result of waveform processing, a second memory 28 for storing the result of waveform processing and the result of determination both performed by the processor 29, and an interface unit 130 for transmitting contents stored in the first and second memories 27 and 28 according to a request command (a kind of commands) applied thereto from an external circuit.

The selector 25 is provided in a pair and the A/D converting means 26 is employed for each of the selectors 25. Each of the selectors 25 has a plurality of, for example, eight sensor input channels. The first and second memories 27 and 28 are respective storage areas that are logically divided in one and the same storage element such as, for example, a random access memory (RAM). The pair of the selectors 25 and 25 are so utilized that where the associated machine component 1 is in the form of the dual row bearing such as shown in Fig. 3, respective outputs from the sensors 3 and 3 one for each row can be inputted to one and the same channel of the paired selectors 25. In such case, the sensor waves from the sensors 3 and 3 one for each row are stored in the first memory 27 correspondingly.

Each determining unit 4 causes the A/D converted waveform signal to be stored in the first memory 27 by sequentially switching one of the sensor input channels over to the other. The stored sensor waveform signals are processes as to the waveform according to the processing set-up condition and, in the event that the detect signal extracted is found to be out of the condition, the defect signal is treated as problematic. Also, by appropriately analyzing the command applied from the controller 6 (Fig. 1), internal statuses, abnormality information and the sensor waveform data are acknowledged to the controller 6 depending on the necessity.

Each of the determining units 4 is of a structure in which a central processing unit (CPU) chip shown in Fig. 9 is mounted on a CPU board together with the selectors 25, interface elements 33 and 34, a memory element 35, a light emitting diode 36, a dip switch 37 and a switch 38. The CPU chip 31 includes the A/D converting means 26 (Fig. 8). The memory element 35 constitutes the first and second memories 27 and 28 and is electrically powered and backed up by a battery cell. The light emitting diode 36 is used to provide an indication of a processing condition of the CPU. Also, each determining unit 4 is disposed by the rolling line and is, therefore, accommodated and sealed within a water-proof box together with water-proof electric connectors.

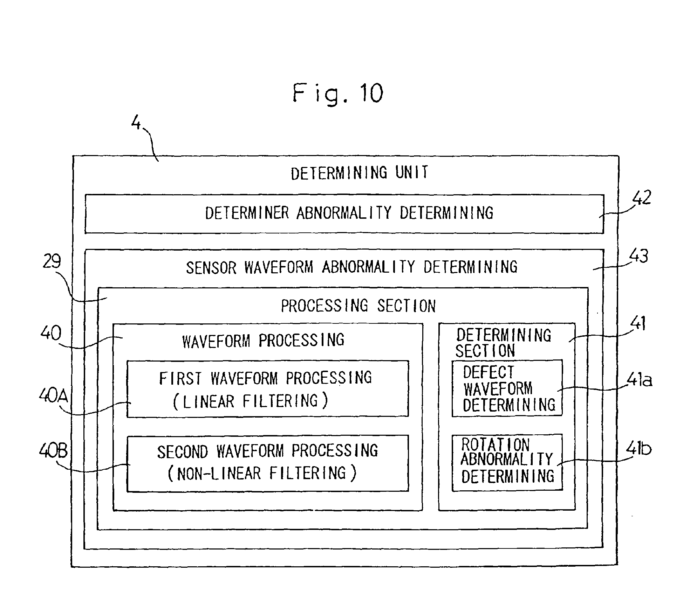

As shown in Fig. 10, each determining unit 4 includes, as a part of the processor 29, a waveform processing means 40 for processing the sensor waveforms, and a determining section 41 for determining the presence or absence of an abnormality in the waveform processed by the waveform processing means 40. The waveform processing means 40 is provided with first and second waveform processing means 40A and 40B for processing the sensor waveforms using different waveform processing techniques, respectively, and selection of which one of the first and second waveform processing means 40A and 40B is to be used is enabled by a selection command fed from the control means 5 (Fig. 1). Also, for each sensor 3 (Fig. 1), an arbitrary one of the first and second waveform processing means 40A and 40B can be selected.

Each of the first and second waveform processing means 40A and 40B is a filtering means for extracting a component of the defect signal from the sensor waveforms. Of them, the first waveform processing means 40A performs a linear filtering operation whereas the second waveform processing means 40B performs a non-linear filtering operation. The determining section 41 is a means for determining the presence or absence of an abnormality by comparing the extracted defect signal with a predetermined predefined range.

The linear filtering operation referred to above is a process in which digital low pass filtering and high pass filtering are performed to the digital data of the sensor waveforms to extract the defect signal. The low pass filtering is used for the purpose of removing mainly a high frequency component which is a noise component, whereas the high pass filtering is used for the purpose of removing the main signal component from the sensor waveforms. By using these two filters, only the detect signal component can be extracted. The amount of calculation increases in proportion to the number of orders of the digital filter.

The non-linear filtering operation referred to above is a process in which a process of extracting data of a predetermined time range W from a data stream of the sensor waveform and determining the difference between the maximum and minimum values of the extracted data is repeated by sequentially shifting the predetermined time range W to thereby extract the defect signal component. In other words, by setting a window of the time range for extraction of the data from the data stream, a maximum and minimum filtering process is performed within the window.

Thus, by determining the difference between the maximum and minimum values within the predetermined window, a variation component (corresponding mainly to the main signal in the instance now under discussion) that appears over a sufficiently long range by the window length and any possible influence brought about by a variation component (corresponding to the high frequency noise component in the instance now under discussion) that appears over a short range can be relieved.

Since the difference between the maximum and minimum values is determined, a positive value can be obtained regardless of the polarity of the defect signal. While the linear filtering technique functions according to the design of filtering characteristics, a signal frequency component removed by the data extraction window length can vary qualitatively. The amount of calculation depends on maximum and minimum value calculating algorisms, but no product-sum operation is required and, therefore, it is superior to the linear filter.

Since the linear and non-linear filtering operations have their own merits and demerits, the use of the waveform processing means 40A and 40B capable of performing the linear and non-linear filtering processes, respectively, is preferred. Table 1 below illustrates comparison of the respective features of those filtering processes.

**Table 1**

| Technique | Linear Filtering | Non-Linear Filtering |
|---|---|---|
| Features | * Design of frequency region (Design Tools Available) * Readily knowledgeable and easy to analyze. * Severe design results in increase of the number of filtering orders * Large amount of calculation (Product-sum operation) * If improperly designed, the defect signal is removed too. | * Designed by cut window length * Due to noun-linear processing, difficult in theoretical analysis. * Amount of calculation tending to increase with increase of the cut length * Positive output value * Defect signal relatively easy to be extracted |
| Calculation Amount | Product-sum x Filtering Order No. | Comparison x Cut Length (Compressible) |

Results of simulation tests have indicated that as compared with the linear filtering technique, the non-linear filtering technique gives rise to a relatively large amplitude of the defect signal component. This appears to have resulted from the fact that in the linear filtering process, high frequency signal components as well as low frequency signal components, both included in the defect signal, are intercepted. This is a substantial phenomenon and is therefore unavoidable. On the other hand, with the non-linear filtering process, although an amplitude can be obtained, a signal width information tends to be expanded. This is also a substantial phenomenon found in the non-linear filtering process and is therefore unavoidable.

Abnormalities detected by each of the determining units 4 will now be described. As shown in Fig. 10, each of the determining units 4 includes a determiner abnormality determining means 42 and a sensor waveform abnormality determining means 43. The determiner abnormality determining means 42 is operable to determine the presence or absence of an abnormality resulting from the respective determiner itself whereas the sensor waveform abnormality determining means 42 is operable to detect the presence or absence of an abnormality resulting from the sensor waveform. The sensor waveform abnormality determining means 43 is constituted by the previously described waveform processing means 40 and the determining section 41. Relations among types, states and causes of the abnormalities are tabulated in Table 2 below.

**Table 2**

| Types of Abnormalities | | States | Causes |
|---|---|---|---|
| Determiner Abnormality | Communication Abnormality | * No response in a predetermined time to communication from the controller * Response data abnormality and so on. | * Connection NG * ID Setting NG * Noise Inclusion |
| | Parameter Abnormality | * Improper initial value for the determining parameter setting data | * Back-up Battery NG |
| | CPU Abnormality | * CPU abnormality (Interruption Process NG and so on) | *Software Bug |
| Sensor Waveform Abnormality | Rotation Abnormality | * No specific sensor signal frequency detected * Specific sensor signal frequency displaced | * Sensor NG (Peel-off, Breakage, etc) * Bearing Seizure |
| | Detection of Defect Waveform (1 to 3 stages) | * Maximum defect signal value exceeding the standard value | * Abnormality on the rolling surface |

The determiner abnormality may be classified into a communication abnormality (an abnormality occurring on the bus communication protocol), a parameter abnormality (improper data on processing conditions used in the wave signal processing), and a CUP abnormality (mainly software bugs such as resulting in interruption abnormality, system abnormality and so on). In the event of detection of the determiner abnormality, an electric power supply should be re-triggered on and necessary remedies should be taken immediately after the phenomenon has again occurred.

The sensor waveform abnormality occurs when as a result of the data processing of the captured sensor waveform it is determined that the sensor waveform is problematic in any way. The sensor waveform abnormality determining means 43 provides an indication of an abnormal state only when the sensor waveform abnormality is repeatedly detected a number of times.

The sensor waveform abnormality includes a defect waveform abnormality and a rotation abnormality that are determined by a defect waveform abnormality determining section 41a and a rotation abnormality determining section 41b, respectively, both of which are provided in the determining section 41.

The defect waveform abnormality determining section 41a is operable to determine the presence of a defect waveform abnormality in the event that it is detected that the maximum value of the defect signal exceeded a threshold value consecutively through a plurality of cycles of determining operations. Neither the phase of the defect signal nor the signal width is taken into consideration. The threshold value is set in a plurality of kinds and, in the case of the three kinds of the threshold value available, they are set to respective values which is equal to, two times and four times a predetermined value.

Where the machine component 1 is a rolling bearing, the presence of a flaw on the rolling surface of the outer race 12 (Fig. 3) results in generation of strains as the rolling elements 13 pass successively over the flaw on the rolling surface and, therefore, a defect signal abnormality occurs. Although the exact position of the flaw appearing on the rolling surface of the outer race 12 with respect to a circumferential direction thereof can be determined by the phase of the defect signal, recognition of the phase is necessary where no location is required to be identified. In the case of the roll support bearings used in a continuous casting apparatus, of the component parts of each roll support bearings, since the outer race 12 is subjected to the severest condition of use and since the lowest point of the outer race 12 constitutes a factor of the lifetime thereof, positioning of the sensor 3 at the lowest point of the outer race is effective to facilitate an efficient detection of the presence of an abnormality.

The rotation abnormality determining section 41b is operable to perform a comparison with the other sensor main signal cycle connected with the associated determining unit 4 to determine the presence of a rotation abnormality in the event that the case in which the main signal cycle does not fall within the predefined range is detected a number of times consecutively. In the event that the main signal cycle of all of the sensor signals is out of the predefined range, it is determined that the line is not operated and a count for continuous number of times is cleared. The predefined range referred to above is determined by suitably determining an error component.

The main signal cycle is a cycle in which the rolling elements 13 move past the position of the associated sensor 3 and, therefore, if the machine component 1 is a bearing, it corresponds to the product of the number of rotation of the bearing multiplied by the number of the rolling elements 13. For this reason, by the detection of the rotation abnormality, the presence of an abnormality in the number of rotation of the bearing can be detected. In other words, by comparing the sensor waveforms of the machine components which ought to rotate the same number of rotation, one of the machine components 1 in which rotation is troubled can be detected. By way of example, with respect to the bearings supporting an array of rolls 8 lined up continuously, when the main signal cycle of the sensor waveform is compared, it can be determined that the rotation of the bearing is obstructed by any reason if the sensor waveform of only some of the sensors 3 show that the rotation is retarded. Also, even where the sensor waveforms of the bearings at the opposite ends of each of the rolls 8 or the bearings on respective rows of the double row bearings are compared with each other, the presence of a difference in the main signal cycles provides an indication that the bearing is obstructed by any reason.

The sequence of processing of each of the determining units 4 will now be described. The memory element (an extended memory) 35 shown in Fig. 9 stores therein an CPU error, a processing procedure, a processing condition, a result of measurement, a result of determination and the captured sensor waveform data.

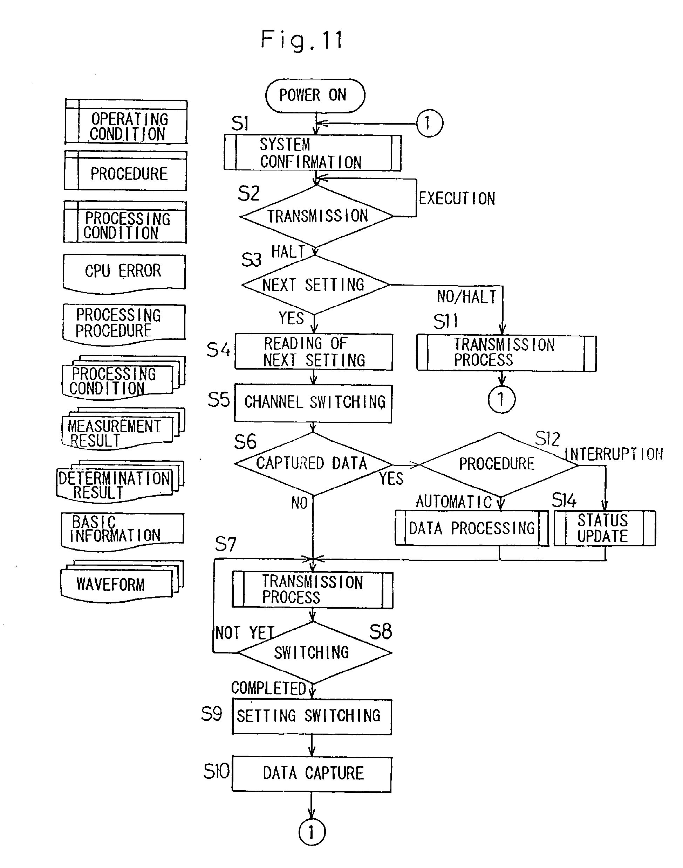

The sequence takes place as shown in a flowchart of Fig. 11. Briefly speaking, at the outset a channel switching for selection of the sensor waveform is carried according to a setting (S5). After the channel switching, since a few seconds is required for the data level to be stabilized, a data processing of the sensor waveform captured in the memory is carried during the is period (S12). Thereafter, when the channel switching is fixed, processing parameters are updated and a data capturing process is executed (S10). During the data processing and the data capturing, a transmission processing is appropriately performed (S7) in readiness for analysis of the received commands and preparation of transmission data. In the event that the sensor waveform is requested by the control means 5, a data capturing process is registered in an interruption procedure to enable interruption into an automatic processing procedure. Start and completion of the A/D conversion and communication with the bus run (buffer capture and sweeping) are performed during the interruption process (S14).

A method of controlling communication between the control means 5 shown in Fig. 1 and each of the determining units 4 will now be described. Where the control means 5 is made up of the controller 6 and the information processing means 7 as shown in Fig. 1, communication between the control means 5 and each of the determining units 4 which will now be described is a control of communication between the controller 6 and each determining unit 4.

The communication system is a half duplex communication system. The control means 5 is used as a control station and each determining unit 4 is used as a slave station. The slave station cannot communicate unless instructed by the control station. The slave station merely responds to a transmission request sent thereto.

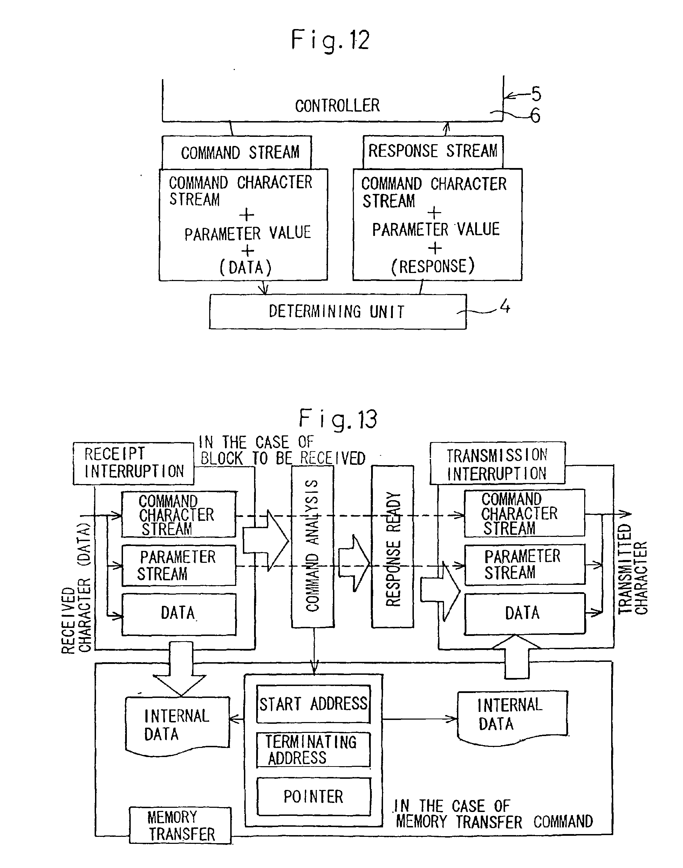

The structure of the command and that of the response will now be described with reference to Fig. 12. A stream of commands supplied from the control means 5 to each determining unit 4 is made up of an array of command characters including a plurality of, for example, four alphabet characters, a parameter value (two-digit character) and, optionally, data. No data delimiter exists. On the other hand, a stream of responses supplied from each determining unit 4 to the control means 5 in response to the command stream is made up of the command character stream and the parameter values received and a response data if requested by the command stream. If the proper command stream is received, the response data corresponding to the command characters and the parameter values are returned. On the other hand, if the false command stream is received, a predetermined response data is returned.

Broadly, the command is classified into a basic command and a memory data transfer command. The basic command is of a kind used to query the status of each determining unit 4 or to change an operating state, and data are made up of, for example, a stream of ASCII characters ending with a NULL character. The memory data transfer command is of a kind used to transmit and receive the entire data stored in the memories 27 and 28 (Fig. 8) within a certain range, and the data transmitted and received are a binary data of a standard length. When the memory data transfer command is used, a procedure for the data analysis performed in the control means may increase, but the command analyzing process performed in each of the determining units 4 is lessened and, therefore, the possibility of the processing operation of each determining unit 4 being hampered can be reduced.

The basic command is available in various types as shown in Table 3 below. In this Table 3, the legends "Auto" and "Trm" represent respective commands that can be used during an automatic monitoring mode and a terminal operated mode, both of which will be described later.

**Table 3**

| Naming | Command | Parameter | Data | Response | Meaning | Operation |
|---|---|---|---|---|---|---|
| Version | GVER | 00 | none | Version Character Stream | Acquisition of Software Version in Each Determining Unit | Auto/Trm |
| Process Status | GCND | 00 | none | Current Status Code¹ | Acquisition of Current Status | Auto/Trm |
| | SCND | Status Code | none | Preset Status Code | Setting of Current Status | Auto/Trm |
| CPU Error | GERR | 00 | none | Frequency of Occurrence of Errors | Acquisition of CPU Errors Occurred | Auto/Trm |
| | GERR | Error No. (01 - 64) | none | CPU Error Code², Time of Occurrence | Error Code of Error No. | Trm |
| | SERR | -1 | none | Frequency of Errors Occurred(0) | Initialization of CPU Error Info. | Trm |
| Time | GCLK | 00 | none | Current Timing (min) | Extraction of CPU Time Info. | Trm |
| | SCLK | 01 | Time Setting Value (0-9999999) | Preset Time (min) | Setting of CPU Time Info. in unit of min.) | Trm |
| Determination Result | GALM | 00 | none | Determination Result NG Info.³ | Acquisition of Presence or Absence of Determination Result NG Info. | Auto/Trm |
| | SALM | -1 | none | Result Response⁴ | Initialization of Presence or Absence of Determination Result NG Info. | Trm |
| Measured Data | SMES | -1 | none | Result Response | Initialization of Measured Data on Set No. | Trm |
| Determination Data | SRES | -1 | none | Result Response | Initialization of Determination Result Data or Set No | Trm |
| Waveform Data | SWAV | Wave. No. (01 - 03) | Sensor No. ("1"-"16") | Result Response | Setting of Waveform Data Capture (Start acquisition immediately after ready) | Trm |
| | GWAV | 00 | none | Acquired Status Code | Acquisition of Status of Waveform Data Acquisition | Trm |

The memory transfer command is used to transmit and receive the date of the memories 27 and 28 in the form as presented. The data is binary.

The basic command is available in various types as shown in Table 4 below.

**Table 4**

| Naming | Command | Parameter | Data | Response | Data Capacity | Meaning | Operation |
|---|---|---|---|---|---|---|---|
| Processing Procedure | GSEQ | 00 | none | Processing Procedure | 128 Byte | Acquisition of Processing Procedure Data | Trm |
| | SSEQ | 01 | Processing Procedure | Result Response | 128 Byte | Setting of Processing Procedure Data | Trm |
| Inspection Data | GPRM | Set No. (01-32) | none | Inspection Data | 128 Byte | Acquisition of Inspection Data on Set No. | Trm |
| | SPRM | Set No. (01-32) | Inspection Data | Result Response | 128 Byte | Acquisition of Inspection Data on Set No | Trm |
| Measured Data | GMES | Set No. (01 - 32) | none | Measurement Result | 20 Byte | Acquisition of Measured Data on Set No | Trm |
| Determination Data | GRES | Set No. (01 - 32) | none | Determination Result | 64 Byte | Acquisition of Determination Data on Set No | Trm |
| Waveform Data | GWAV | Waveform No. (01-03) | none | Waveform Data | 120 Byte | Acquisition of Waveform Data | Trm |

The manner in which the command stream and the response stream are stored will hereinafter be described. Fig. 13 illustrates a conception thereof. Since the command character stream (for example, 4 bytes) and the parameter stream (for example, two bytes) are of a fixed length, they are stored in a storage area separate from a transmitting and receiving buffer (not shown). The data and the response are basically passed through the transmitting and receiving buffer once and, even when the communication is not good, care is taken that they will not adversely affect the other processes.

In the case of the basic command, since the data and the response do not exceed a transmitting and receiving buffer length, all of them are temporarily stored in the transmitting and receiving buffer and, after it has been confirmed that the transmitting process has been performed properly, the data (response) is accommodated.

On the other hand, the memory transfer command calculates and stores, in addition to the procedure of the basic command, a start address, a terminating address and a transmission start pointer value based on an memory address value separate from the transmitting and receiving buffer. The start and terminating address values are determined at a stage of the command analysis, or that of preparation of the response. This is because there is a necessity of performing a DMA transfer depending on the necessity. Also, where the data (response) is larger than a single transfer block length, an internal data transfer is carried out with due regard paid to the case in which communication is interrupted halfway.

The control means 5 shown in Fig. 1 will now be described. The control means includes, as hereinbefore described, the controller 6 connected with a bus line to communicate with each of the determining units 4, and the information processing means 7 connected with the controller 6 through a serial data transmission line for collecting data. The controller 6 issues the previously described command to the determining units 4 and performs the parameter setting for each of the determining units 4 and capture of response-based information from each of the determining units 4.

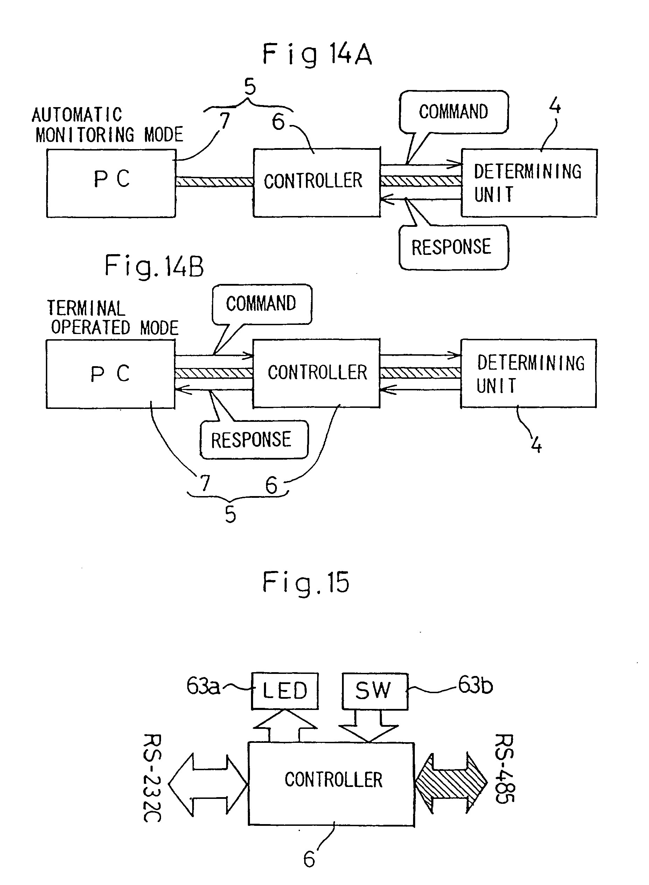

The control means 5 has two modes, namely, the automatic monitoring mode and the terminal-operated mode. Figs. 14A and 14B illustrate explanatory diagrams showing the automatic monitoring mode and the terminal-operated mode, respectively.

The automatic monitoring mode is a mode during which a request for transmission of a result of determination is sequentially issued to each of the determining units 4 and the result of determination is acquired from each of the determining units 4. Abnormality information is at all times collected by the controller 6 during this automatic monitoring mode.

The terminal-operated mode is a mode during which a request for transmission of the result of determination and information other than the result of determination is made to each of the determining units 4 and a response thereto is subsequently acquired. In other words, an arbitrary command is issued from the information processing device 7 and the issued command is sent to each of the determining units 4 through the controller 6 and then, optionally, through the bus line so that the response thereto can be acquired. Collection of the waveform data is carried out during this terminal-operated mode.

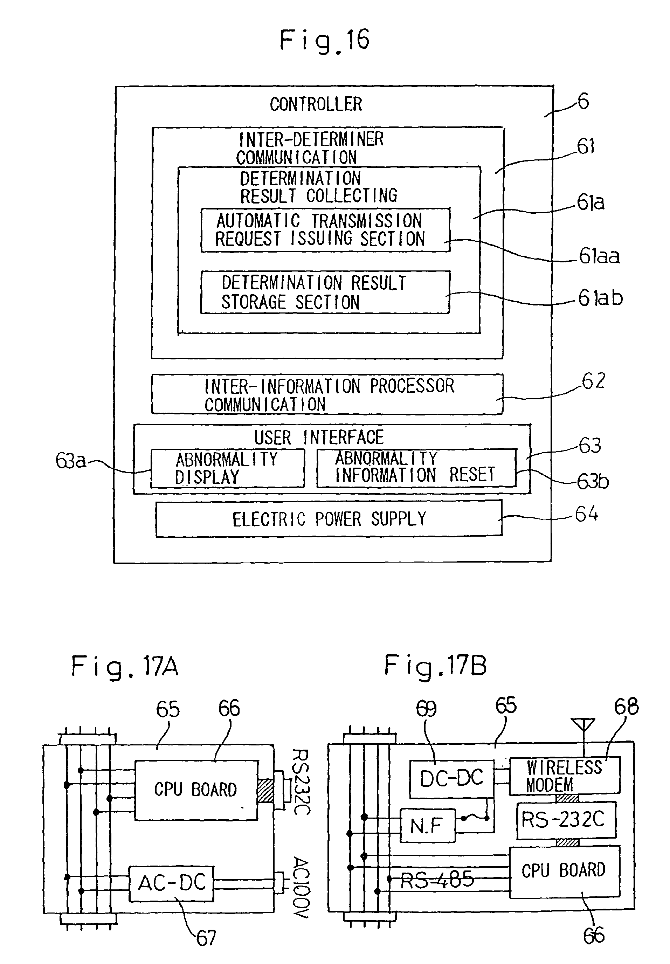

The controller 6 will now be described with reference to Figs. 15 to 17A and 17B. The controller 6 is operable to ascertain the operating state of each of the determining units 4, connected therewith through a bus line, by automatically issuing a command, so that the presence or absence of an abnormality information can be collected therefrom. In the event of the presence of an abnormality, an abnormality display means (for example, a light emitting diode) 63a briefly provides a visual indication of the presence of such abnormality. The controller 6 is also operable to convert a command instruction from the information processing device 7, connected serially therewith, into a form suitable for half duplex communication depending on the necessity and to exchange the data of each determining unit 4 with the information processing device 7.

In other words, as shown in Fig. 16, the controller 6 includes an determiner communicating means 61 for communicating with each of the determining units 4, an processor communicating means 62 for communicating with the information processing device 7, an user interfacing means 63 and an electric power supply means 64.

The determiner communicating means 61 represents a means for communicating between each of the determining units 4 and the controller 6. This determiner communicating means 61 performs, for example, a process of automatically ascertaining the operating state of each determining unit 4 (that is, collection of the abnormality information) and a process of acknowledging the presence of an abnormality in one or some of the determining units 4. Specifically, the determiner communicating means 61 is provided with a determination result collecting means 61a for automatically collecting results of determination. The determination result collecting means 61a includes an automatic transmission request generating section 61aa for automatically issuing a transmission request to each of the determining units 4 by polling as hereinbefore described, and a determination result storage section 61ab for storing results of determination responded.

The processor communicating means 62 represents a means for communicating between the controller 6 and the information processing device 7. This processor communicating means 62 performs, for example, a process of acknowledging the state of the controller 6 (processing of a controller dedicated command and responses) and a process of transferring to each of the determining units 4 (conversion of commands and protocol conversion).

The user interfacing means 63 is simplified user interface such as, for example, an abnormality information reset means 63b and an abnormality display means 63a. The abnormality information reset means 63b is made up of a switch as shown in Fig. 15.

The electric power supply means 64 is made up of a built-in electric power unit and is operable to supply an electric power to the bus line.

A block diagram of the internal hardware structure of the controller 6 is available in two type as shown in Figs. 17A and 17B that is used one at a time.

Fig. 17A is applicable where the controller 6 is located within the monitoring room 17 (hence, with no wireless zone), and the controller 6 in this case shown therein includes a casing 65 in which a CPU board 66, an AC-DC converter 67 and terminals for bus lines, serial transmission and commercial power lines.

Fig. 17B is applicable where the controller 6 is located within the machine room 16 of the plant, and the controller 6 in this case shown therein includes, in place of the serial transmission terminal used in Fig. 17A, a wireless modem 68 and DC-DC converter 69 providing a power source therefor. In the example shown in Fig. 17B, the AC-DC converter 67 and the AC power source terminal both shown in Fig. 17A, are not illustrated for the sake of brevity.

Communication between the controller 6 and each of the determining units 4 is carried out according to the half duplex system stipulated in the RS-485 standards. Specifically, the controller 6 communicates with each of the determining units 4, that are connected with the bus line, on a 1:1 basis, the communication procedure of which was described above, for automatically collecting the state of processing performed thereby and the abnormality information. As a result thereof, in the event of the presence of an abnormality in one or some of the determining units 4 and/or the controller 6 itself, it is acknowledged by means of the abnormality display means 63a (Fig. 15) such as, for example, a light emitting diode.

More specifically, the determining units 4 that are connected with the bus line are registered in the controller 6 beforehand. The controller 6 then automatically issue a query command according to the registration information sequentially to the determining units 4 to query about the status thereof and grasps the respective statuses of the determining units 4. Also, in the event that the command to each of the determining units 4 is inputted from the information processing device 7, the automatic processing is temporarily interrupted and, instead, a process of delivery is performed.

Communication between the controller 6 and the information processing device 7 is carried out according to a serial transmission communication protocol (RS-232C). The command inputted to the controller 6, which is outputted from the information processing device 7, includes a command to each of the determining units 4, and a controller dedicated command. The command inputted to the controller 6 is available in various types as shown in Table 5 below. Of them, a processing status command and a connection determining command are the controller dedicated command.

**Table 5**

| Naming | Command | Parameter | Data | Response | Meaning |
|---|---|---|---|---|---|
| Version | GVER | 00 | None | Version Character Stream | Acquisition of Controller Software Version |
| Processing Status | GCND | 00 | None | Current Status Code¹ | Acquisition of Processing Status |
| | SCND | Status Code (00-36) | None | Presetting Status Code | Setting of Processing Status |
| CPU Error | GERR | 00 | None | Frequency of Error Occurrence | Acquisition of Total Frequency of CPU Errors Occurred |
| | GERR | Error No. (01-64) | None | CPU Error Code² Time of Occurrence | Error Code of Error No. |
| | SERR | -1 | None | Frequency of Error Occurrence (0) | Initialization of CPU Error Info. |
| Time | GCLK | 00 | None | Current Time (min) | Acquisition of CPU Time Info. |
| | SCLK | 01 | Time Setting Value (0-9999999) | Set Time (min) | Setting of CPU Time Info.(in unit of min) |
| Connected Determining Unit | GCON | 00 | None | Connected Determining Unit Code³ | Acquisition of Connected Determining Unit Info. |
| | SCON | 01 | Connected Determin-ing Unit Code | Preset Connected Determining Unit Code | Setting of Connected Determining Unit Info. |
| Abnormality Information | GALM | 00 | None | Info. On Presence or Absence of Determination Result⁴ | Acquisition of Presence or Absence of Collected Determining Result NG |
| | SALM | -1 | None | Result Response⁵ | Initialization of Info. on Presence or Absence of Determination Result NG |

Referring again to Fig. 1, the information processing device 7 is connected with the controller 6 through a serial transmission cable. The information processing device 7 collects, depending on the necessity, waveform data by the terminal operated mode during which it communicates with each of the determining units 4. Information about the operating states of the determining means 4 and the controller 6 and the presence or absence of an abnormality in one or some of the determining units 4 and the controller 6 are also collected by the utilization of the command.

The manner in which the data are accumulated by the information processing device 7 will be described. Collection of the waveform data can be best accomplished if a personal computer is used. This is because the sensor waveform data acquired by each of the determining units 4 can be acquired in a digital data form and because a relatively large quantity of data can easily be collected from a filing device.

The most important merit that can be obtained when the personal computer is used for the information processing device 7 as a data collecting means lies in that the numerical (digital) data of the sensor waveform captured in each of the determining units 4 can be collected in the form as the numerical data. If the personal computer is used for the information processing device 7, since the date which each of the determining units 4 employs for the process of determination, not only can the same process as performed by each of the determining units 4 be performed reproduced on the information processing device 7, but a tuning test of the processing conditions can also be performed. Reproduction of the process can be accomplished by running a general purpose data processing application software such as, for example, a spreadsheet program.

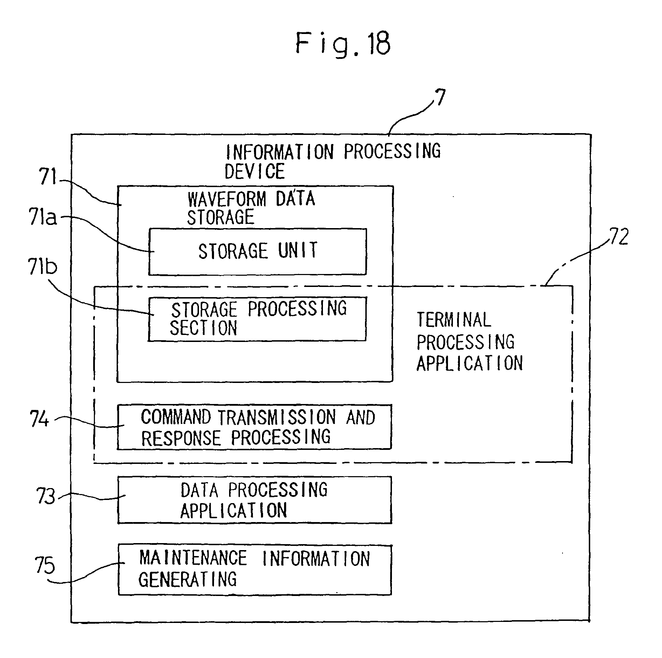

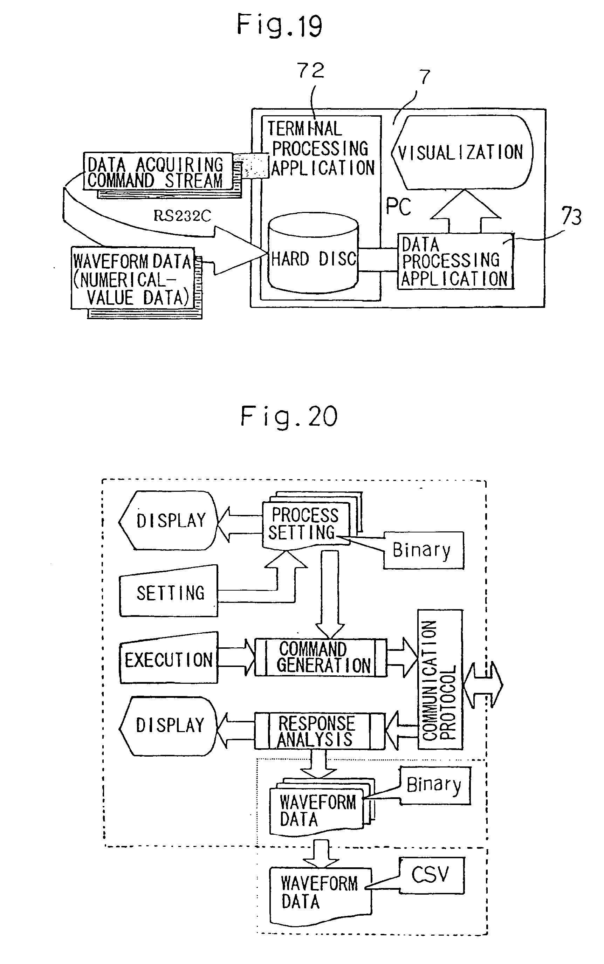

The information processing device 7 includes, as shown in Fig. 18, a waveform data storage means 71 for storing sensor waveforms of the digital data captured by each of the determining units 4. This waveform data storage means 71 is made up of a storage 71a for storing the sensor waveforms and a storage processor 71b for performing a process of storing. The storage processor 71b is constituted by a portion of a terminal processed application software 72 shown in Fig. 19. The terminal processed application software 72 makes it possible for the accumulated waveform data to be visualized through a data processing application software 73.

The terminal processed application software 72 is a program for issuing a command to each of the determining units 4 and the controller 6 and then securing responses therefrom and forms a command transmission/response processing means 74. The transmission of the various commands referred to above and the response processing both performed by the information processing device 7 are performed by the command transmission/response processing means 74. Fig. 20 illustrates a conception of the process performed by the terminal processed application software 72. As hereinbefore discussed, the command includes the basic command and the memory transfer command, but in the case of the basic command, both the data and the response are a stream of characters and, therefore, a job of generating and analyzing the character stream is necessary. On the other hand, the memory transfer command deals with the binary data of the various settings of each determining units 4 and those of the waveform and, therefore, requires a job of compiling parameter values, displaying and data conversion.

In addition, the information processing device 7 may be provided with a maintenance information generating means 75 for generating a predetermined maintenance information associated with the machine components, based on the collected results of determination performed each of the determining units 4. The maintenance information generated by the maintenance information generating means 75 is associated with, for example, scheduling of the time of replacement of the machine components, the time of placing an order and so on.

With the machine component monitoring system of the construction described hereinabove, monitoring of the statuses such as the presence or absence of an abnormality and the lifetime of each of the machine components 1 including the rolling elements can be achieved with a simplified structure at a reduced cost and, also, the monitoring can be precisely and efficiently achieved.

In particular, in the structure according to the illustrated embodiment of the present invention, each of the determining units 4 operates independently to such an extent that the operating state of each determining unit 4 itself can be grasped and/or the abnormality information of each of the machine components 1 can also be grasped, and can determine the sensor signals in such a way that a number of signals from the plural sensors 3 can be processed and the processing parameters can be changed. Also, with each of the determining units 4, by remote controlling through the control means 5, retrieval of the information and setting of the information can be accomplished. Also, each of the determining units 4 is of a water-proof, heat-resistant structure and operates assuredly, can easily be connected with a network and can easily be installed.

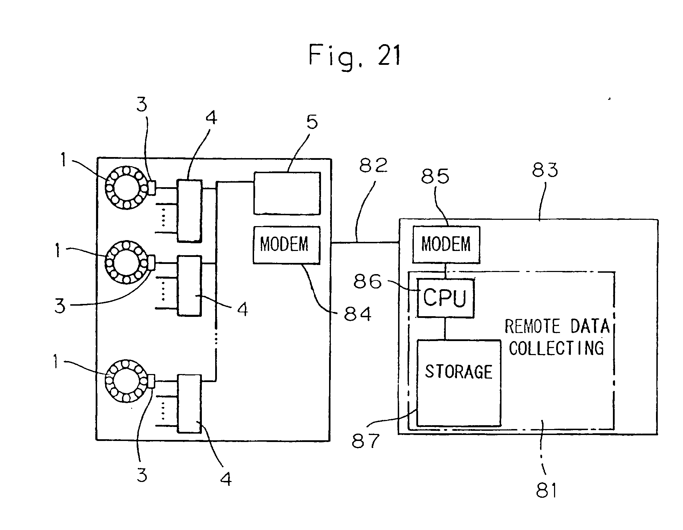

Fig. 21 illustrates an example in which the machine component monitoring system of the foregoing embodiment of the present invention has been developed and expanded to a different application. In this example, a remote data collecting means 81 is provided. In other words, at a location remote from the control means 5, there is provided an information processing means 83 connected with the control means 5 through a communication network 82, and the remote data collecting means 81 is incorporated in this information processing means 83. The control means 5 is of a type capable of collecting not only the results of determination from the respective determining units 4, but also the sensor waveforms inputted to each of the determining units 4 in the manner described hereinabove. The information processing means 83 located at a remote place may be either a personal computer or a general purpose mainframe computer and includes a central processing unit (CPU) 86 and a storage means 87. The remote data collecting means 81 is operable to collect the results of determination and the sensor waveforms, which the control means 5 has collected from each of the determining units 4, and is made up of the central processing unit (CPU) 86, the storage means 87 and a processing program (not shown). The communication network 82 may be, for example, a public telephone network or a dedicated telephone network and connects between the control means 5 and the information processing means 83 at the remote location by means of modems 84 and 85.

As hereinabove described, the use of the remote data collecting means 81 and the provision of the capability of collecting the determination results and the sensor waveforms at the remote location allows an expert servicing person of, for example, a manufacturer of the machine components to perform a thorough analysis about the statuses and tendencies of the machine components.

In describing the foregoing embodiment, the description has been made where the machine components 1 to be monitored is comprised of rolling bearings. However, the machine components 1 to be monitored may be any machine component provided with rolling elements, for example, a constant speed joint or a ball screw mechanism as will be described subsequently.

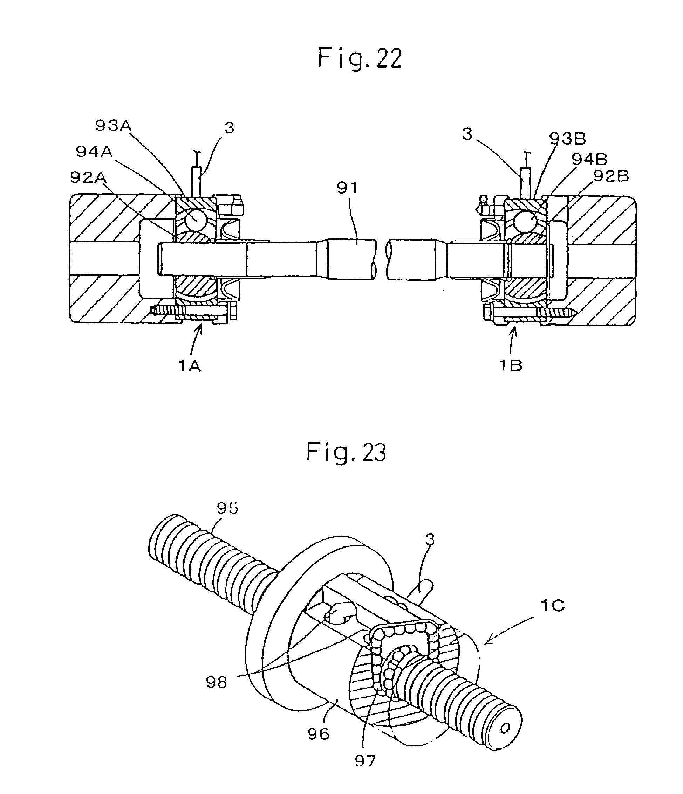

Fig. 22 illustrates the example in which the machine components 1 to be monitored are comprised of constant speed joints. The constant speed joints 1A and 1B which form the machine components 1 to be monitored are disposed on respective opposite ends of a shaft 91 and each includes an inner race 92A and 92B, an outer race 93A and 93B, and a plurality of rolling elements 94A and 94B interposed between the inner and outer races. The sensors 3 are positioned in face to face relation with the outer races 93A and 93B, respectively.

Fig. 23 illustrates the example in which the machine components 1 to be monitored are comprised of a ball screw mechanism. The ball screw mechanism 1C forming the machine component 1 to be monitored includes a screw shaft 95, a nut 96 threadingly mounted on the screw shaft 95 and a plurality of rolling elements, for example, balls 97 interposed between the screw shaft 95 and the nut 96. The nut 96 has a circulating passage 98 defined therein for rolling circulation of the row of the rolling elements 97. The circulating passage 98 may be in the form of, for example, a return tube. The sensor 3 is positioned on and relative to the nut 96.

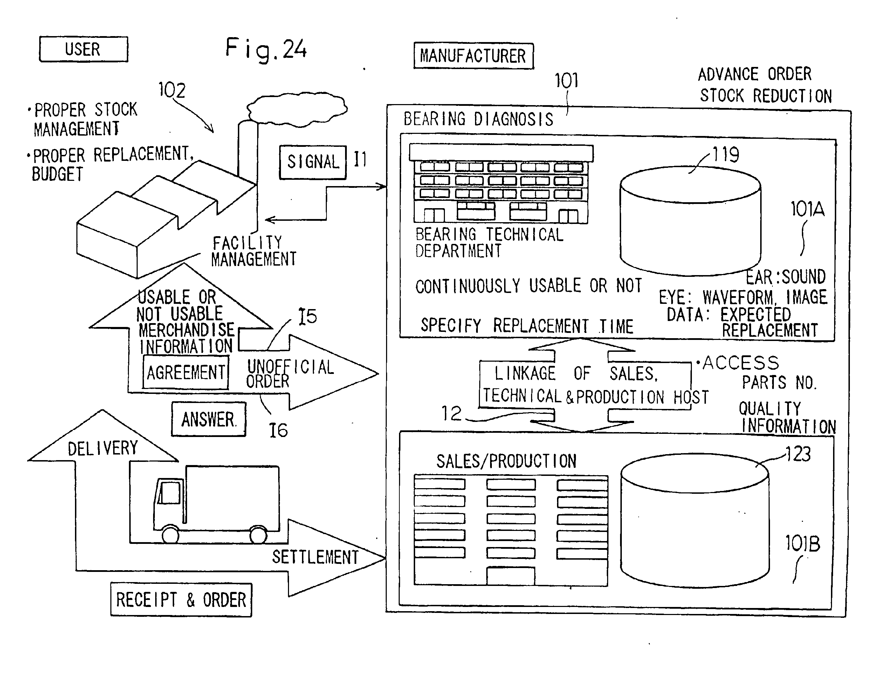

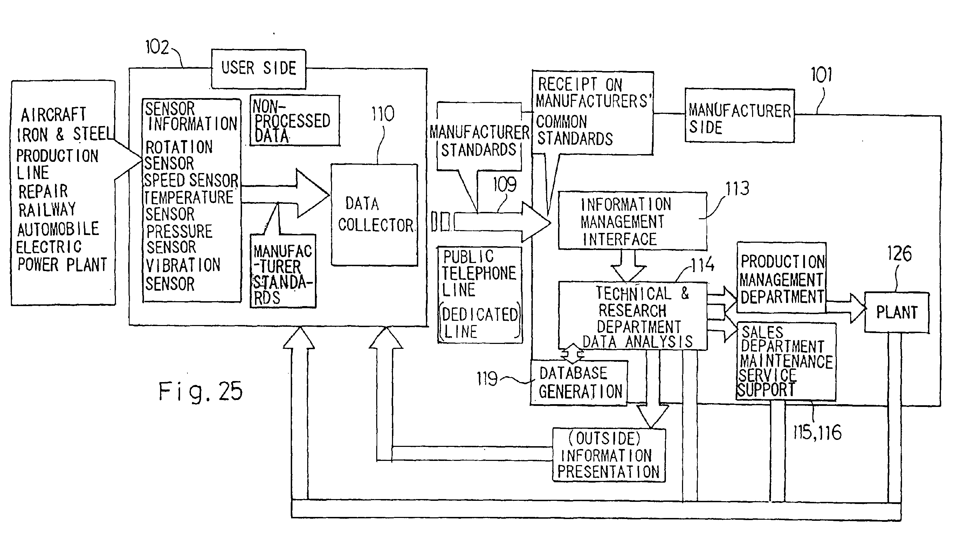

Hereinafter, a preferred embodiment of a monitoring, diagnosing and selling system according to the present invention will be described with particular reference to Figs. 24 to 26. Of these figures, Fig. 24 illustrates a main conception of the system and Fig. 25 illustrates an explanatory diagram of a medium conception showing the flow of information among business establishments. Fig. 26 illustrates a block diagram showing a detailed conceptual structure of the present invention.

As shown in Fig. 26, the monitoring, diagnosing and selling system of the present invention is so designed and so configured that at a business establishment 101 of a corporation engaged in manufacturing and selling the machine components, monitoring and diagnosis are performed with respect to the machine components 1 used in a machine 103 installed at a business establishment 102 of a client corporation and information on results of diagnosis is transmitted to the business establishment 102 of the client corporation together with merchandise information affixed thereto. The sensors 3 are to be installed relative to the machine components 1 to be monitored and diagnosed.

The machine component 1 to be monitored and diagnosed is of a type provided with rolling elements such as those used in a rolling bearing, a constant speed joint, a ball screw mechanism or the like. The machine 103 referred to above is of a design utilizing the above described machine component 1, particularly a plurality of the machine components 1, and may be installed on production or servicing line of an iron and steel manufacturing plant, a paper manufacturing industry, aircrafts, railways, automobiles or others. Alternatively, it may be any plant such as, for example, an electric power plant. The machine 103 herein referred to is intended to encompass a stand-alone machine and a production or servicing facility where a plurality of machines are installed. Also, the machine 103 may be the one employing a plurality of shafts such as roll shafts, and the machine component 1 may be a bearing for supporting each of those shafts.

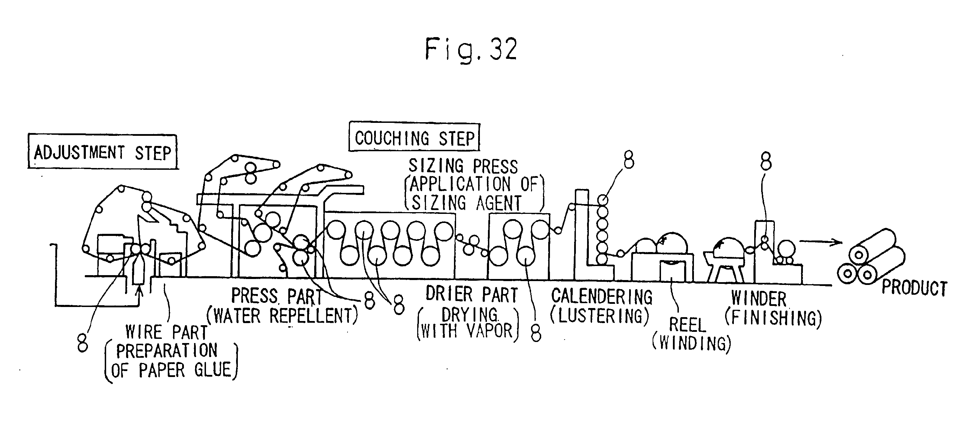

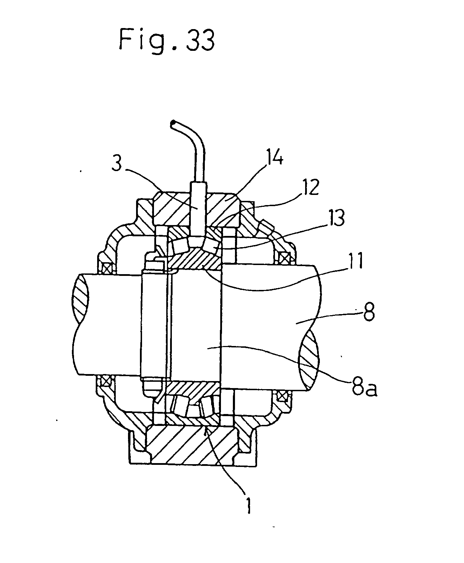

By way of example, where the machine 103 is a paper making machine, a plurality of rolls 8 are used by machines at various processing stations as shown in Fig. 32, and the machine components 1 which are represented by bearings each used to support a respective end of a roll shaft 8a of each of those rolls 8 (Fig.33) is subject to monitoring and diagnosis. Each of these machine components 1 is a bearing including the inner race 11, the outer race 12 and the rolling element 13 interposed between the inner and outer races 11 and 12. The sensor 3 is, in the instance as shown in Fig. 33, mounted on a housing 14 in which the machine component 1 comprised of the bearing is disposed.

As described in connection with the embodiment of the monitoring system, the machine component to be monitored may be a constant speed joint such as shown in Fig. 22.

As described in connection with the embodiment of the monitoring system, it may occur that the machine component to be monitored may be the ball screw mechanism shown in Fig. 23.

The sensor 3 is of a type capable of detecting a factor associated with the lifetime of the machine component 1 and may be, for example, a vibration sensor, a temperature sensor or the like. Alternatively, the sensor 3 may be an imaging element for imaging the machine component 1 or a rotation sensor, a speed sensor, a pressure detecting sensor or the like.

The business establishment 102 of the client corporation is provided with a sensor information transmitting means 110 for transmitting through a line 109 sensor information 11 which is raw information (non-processed data) detected by the sensor 3 or information obtained by processing the raw information detected by the sensor 3. The line 109 may be either a public telephone line or a dedicated line.

The sensor information transmitting means 110 includes an information collecting section 111 for collecting information detected by each of the sensors 3 provided one for each of the machine components 1, and an information transmitting section 112 for transmitting the information collected by the information collecting section 111 to the line 109.

The sensor information transmitting means 110 may be suffice if it is a means capable of transmitting the information detected by the sensor 3 to the line 109 and may be an electric appliance having a limited function, a computer such as, for example, a personal computer or the like, or any other general purpose information processing appliance. The sensor information transmitting means 110 may also be either a stand-alone appliance or a plurality of appliances connected with each other. Where the sensor information transmitting means 110 is of a type including the information collecting section 111 and the information transmitting section 112, a data collector which is an electronic appliance may be used for the information collecting section 111 and a controller which is a different electronic appliance may be employed for the information transmitting means 112. The sensor information transmitting means 110 preferably includes a storage means for storing the sensor information I1 acquired from the sensor 3. This storage means may be disposed in either the information collecting section 111 or the information transmitting section 112, or may be separate from any of the information collecting section 111 and the information transmitting section 112.

The information to be transmitted from the sensor 3 to the sensor information transmitting means 110 and the sensor information I1 to be transmitted from the sensor information transmitting means 110 are preferably in accord with a predefined range, for example, a standard stipulated by the manufacturing and selling corporation 101.

The business establishment 101 of the manufacturing and selling corporation is provided with a sensor information receiving means 113 for receiving the sensor information I1 transmitted through the line 109 and a diagnosing means 114 for diagnosing the lifetime state of the machine component 1 based on the sensor information I1 received by the sensor information receiving means 113. It is also provided with a merchandise information adding means 115 for adding merchandise information to a diagnosis result information I2 depending on the diagnosis result information I2, and a diagnosis result information transmitting means 116 for transmitting the diagnosis result information I5, which has been added with the merchandise information, to the line 109.

The business establishment 101 of the manufacturing and selling corporation, although collectively referred to as a business establishment, may be a group of a plurality of business establishments. In the instance now under discussion, the business establishment 101 is divided into a business establishment 101A of a technical and research department and a business establishment 101B of a sales and production department. It is to be noted that the business establishment 101B of the sales and production department is specifically divided into a business establishment of a sales department and a factory which is a business establishment of a production department, and the business establishment of the sales department is distributed at various places.

The sensor information receiving means 113 and the diagnosing means 114 are provided in the business establishment 101A of the technical and research department of the business establishment 101 of the manufacturing and selling corporation whereas the merchandise information adding means 115 and the diagnosis result information transmitting means 116 are provided in the business establishment 101B of the sales and production department. The business establishment 101B of the sales and production department is also provided with an order processing means 124, a merchandise storage section 125 and a decision making means 127 and a diagnosis result utilization production planning support means 128.

The sensor information receiving means 113 has a capability of receiving through the line 109 the sensor information I1 from the sensor information transmitting means 110 at the business establishment 102 of the client corporation and also a capability of identifying the business establishment 102 of which one of the client corporations, i.e., one of the client corporations who transmitted such information. In other words, the sensor information receiving means 113 functions as an information managing interface. The sensor information receiving means 113 may be a general purpose information processing appliance having a communication function such as, for example, a computer or the like, or a special-purpose electronic appliance. Also, the sensor information receiving means 113 is preferably provided with a sensor information storage means (not shown) for storing the received sensor information I1.

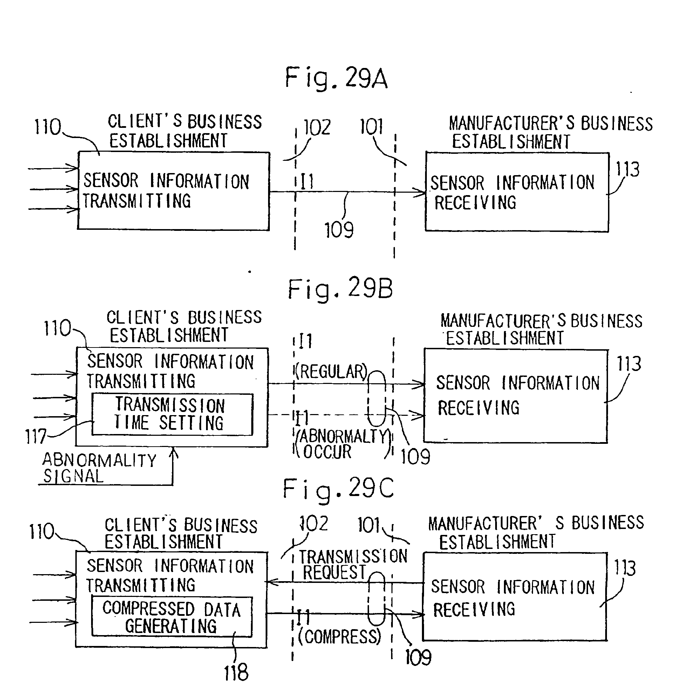

Communication between the sensor information transmitting means 110 and the sensor information receiving means 113 may be carried out in any suitable manner. By way of example, any of the manners of communication between the sensor information transmitting means 110 and the sensor information receiving means 113 as shown in Figs. 29A to 29C can be employed. Specifically, Fig. 29A illustrates the sensor information I1 being transmitted at all times. The regular transmission of the sensor information I1 may be take place 24 hours a day or only during the working hour of the business establishment 101 of the manufacturing and selling corporation or that of the business establishment 102 of the client corporation. In the case of the regular transmission, it is possible for the diagnosing means 114 to perform diagnosis on a real-time basis.

Fig. 29B illustrates a periodical transmission of the sensor information I1. In such case, the sensor information I1 is transmitted at a time set by a transmission time setting means 117 provided in the sensor information transmitting means 110. The interval of the periodical transmission may be set so as to match with the time or the operating period of the machine such as once a day at a predetermined time, or at intervals of a predetermined time such as, for example, at intervals of one hour. In the case of the periodical transmission, it is preferred that other than the transmission at a predetermined time the sensor information I1 can be transmitted at the time of occurrence of a predetermined machine trouble, that is, at the time a predetermined abnormality occurs in the machine. The time of occurrence of the predetermined machine trouble may be, for example, the time at which the machine 103 utilizing the machine components 1 is scrammed, at which time the machine trouble can be recognized by the sensor information transmitting means 110 in reference to an abnormality signal generated from a controlling device of the machine 103.

Fig. 29C illustrates the manner in which the sensor information I1 is transmitted in response to a transmission request. The sensor information transmitting means 110 and the sensor information receiving means 113 are of a type capable of accomplishing a bi-directional communication. In the instance shown therein, the line 109 is built up in response to the transmission request from the sensor information receiving means 113 and the sensor information I1 is then transmitted from the sensor information transmitting means 110. In such case, the sensor information transmitting means 110 is provided with a compressed data generating means 118 for processing the information, obtained from the sensor 3, on a compressed data so that the sensor information I1 can be transmitted as a compressed data.

Referring to Fig. 26, the diagnosing means 114 is operable to diagnosis the lifetime status of the machine component 1 in reference to the sensor information I1 received by the sensor information receiving means 113. This diagnosing means 114 can output a diagnosis result information which preferably includes a result of determination of whether or not the machine component 1 can be usable properly and a result of determination of how long the machine component can be usable if it is determined that the machine component 1 is usable.

The diagnosing means 114 is shown as used in diagnosing information of the specification for each of the machine components 1 registered in a database 119. This diagnosing means 114 is further more shown as used in diagnosing information of examples of diagnosis registered in the database 119. In the database 119, the examples of diagnosis are registered for each type of the machine components 1. The information on the specification of the machine components for each type and the examples of diagnosis, although shown as registered in the same database 119, may be registered in different databases.

The diagnosing means 114 is yet shown as usable in diagnosing information on the environment of use in which the machine components 1 registered in a database 120 are used, or usable in diagnosing information on client corporations. The use environment information may include information about operating conditions such as, for example, the rotational speed, the load and/or the frequency of use, in which the machine components 1 are operated, and information on environment such as, for example, dusts under which the machine components 1 are operated. The client information is unique for each of the client corporations and, where any request has been made in connection with standards associated with the diagnosis, the client information may include information on such request.

The diagnosing means 114 includes an examining section 121 which automatically performs in response to the sensor information I1 determination of whether or not the machine component 1 can be usable properly, and a manual diagnosing section 122 in which a result of diagnosis performed by a man is added to the result of determination performed by the examining section 121 or which performs a modification based on the result of diagnosis performed by a man. The examining section 121 preferably has not only a capability of outputting the result of determination of whether or not the machine component 1 can be usable properly, but also a capability of outputting the result of determination of the period during which the machine component 1 can be used if it be so determined.

The examining section 121 may be a determination-oriented electronic appliance or a general purpose computer. The human diagnosing section 122 embodies a means for displaying information on vibration waveforms or the like based on the sensor information I1 so that they can be perceived by human ears and eyes and a means for enabling a man to add a result of diagnosis or to perform an inputting of a modification and may be comprised of a computer or the like. The additional result of diagnosis has contents that can be diagnosed by the attendant worker although it does not appear in the examining section 121 as a result of determination and it may be added to the result of diagnosis as comments.

The examining section 121 employs a waveform analyzer or a frequency analyzer where, for example, the sensor information I1 is vibration information. On the other hand, where the sensor information I1 is temperature information, it is employed in the form of means for comparing the temperature with a predetermined value or the like. The examining section 121 may be a means for generally determining results of analysis of a plurality of kinds of sensor information I1 such as vibration information and temperature information or the like.

The determination standard employed by the examining section 121 may be a reference value set in the examining section 121 or a determination standard registered in the database 119.

Examples of waveform analysis performed by the examining section 121 will now be described with reference to Fig. 6 which has been referred to in connection with the description of the embodiment of the monitoring system. The sensor information I1 containing the defect signal can be classified into the main signal and the defect signal. Based on the defect signal, determination of the lifetime is carried out.

Any of the following methods can be employed to determine which one of the machine components 1 is currently diagnosed by the diagnosing means 114.

Machine type information on the machine components 1 transmitted together with the sensor information I1 is used.

In such case, by adding information necessary to identify what machine component 1 installed where in the machine 103 of which one of the business establishments 102 of what client corporation, the individual machine components 1 can be recognized by the diagnosing means 114.

By providing the diagnosing means 114 or the sensor information receiving means 113 with a management function to identify the machine to be diagnosed or for which the sensor information I1 being received is associated, the sensor information I1 inputted to the diagnosing means 114 is selected. In this case, the management function of the diagnosing means 114 or the sensor information receiving means 113 may be the one used to identify what machine component 1 installed where in the machine 103 of which one of the business establishments 102 of what client corporation.

The merchandise information adding means 115 is operable to generate merchandise information associated with the machine component to be diagnosed in dependence on the information on the results of diagnosis performed by the diagnosing means and to add the merchandise information to the diagnosis result information. The merchandise information to be added includes price information and delivery date information. This merchandise information adding means 115 is registered with stock information (inclusive of the number of component parts in stock and the place where they are stocked) for each of the machine types registered in a database 123, price information and delivery data information. The database 123 preferably includes a production planning information, and the merchandise information adding means 115 when no stock available, sets the delivery date information to be added as merchandise information, in reference to the delivery date information contained in the production planning information.

The merchandise information adding means 115 may use the merchandise information to be added as estimate information including information asking if there is a will to order.

It is to be noted that where the machine component 1 is of a type that require repair, not replacement, information on the result of diagnosis that repair is sufficient is given by the diagnosing means 114 to the merchandise information adding means 115 and the merchandise information adding means 115 then add repair information, registered in the database 123, as the merchandise information.

The information on the result of diagnosis of the merchandise information addition generated by the merchandise information adding means 115 is transmitted from the diagnosis result information transmitting means 116 to the line 109.

The diagnosis result information transmitting means 116 provided at the business establishment 101B of the sales and production department transmits the diagnosis result information added with the merchandise information. However, separate therefrom the use of the diagnosis result information transmitting means (not shown) at the business establishment 101A of the technical and research department may be made so that the diagnosis result information generated by the diagnosing means 114 can be directly transmitted to the client corporation through the line 109.

The business establishment 102 of the client corporation is provided with a diagnosis result information receiving means 131 in, for example, a housekeeping department 130 or the like so that the diagnosis result information added with the merchandise information that is transmitted from the diagnosis result information transmitting means 116 of the manufacturing and selling corporation to the line 109 can be received. This diagnosis result information receiving means 131 includes an order processing section 132 that can output to the line 109 agreement information I6 agreeing the estimation information included in the merchandise information contained in the received diagnosis result information 15. The agreement information 16 can be received by the diagnosis result information transmitting means 116 and processed by an order receipt processing means 124. The order receipt processing means 124 transmit delivery arrangement information to a merchandize storage section 125 in dependence on contents of the order contained in the agreement information I6. The merchandise storage section 125 may be a plant or factory, a depository in the marketing route, a repository of an agent. The merchandise storage section 125 transports by a truck and then deliver the machine component 1, which is a merchandise, to the business establishment 102 of the client corporation according to the received management information.

After the delivery, decision is made between the client corporation and the decision making means 127 of the manufacturing and selling corporation. This decision may be the one done by means of electronic information. Alternatively or in combination therewith, the decision may be done with the intervention of an external decision making agency 129 such as a bank.

The diagnosis result utilization production planning support means 128 is provided in a production department (production management department) and is operable to generate demand forecast information for each type which is the diagnosis result information of the diagnosing means which has been processed statistically.

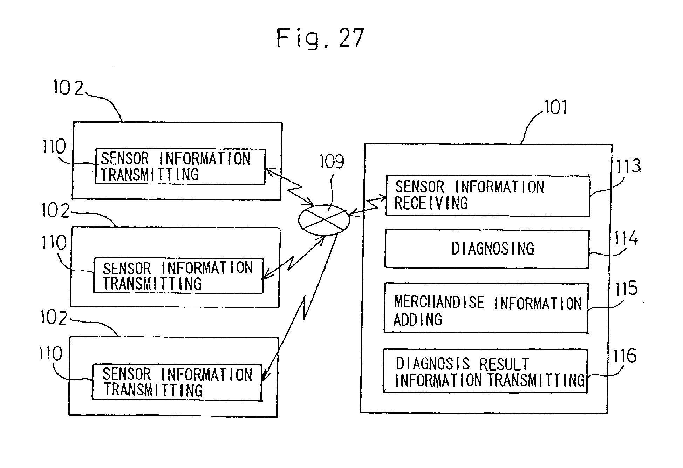

Fig. 27 illustrates a relationship between a plurality of business establishments 102 of the client corporation and the business establishments 101 of the manufacturing and selling corporation. The business establishments 102 of the client corporation and the business establishment 101 of the manufacturing and selling corporation are generally in a multi vs. 1 relation or a multi vs. multi relation.

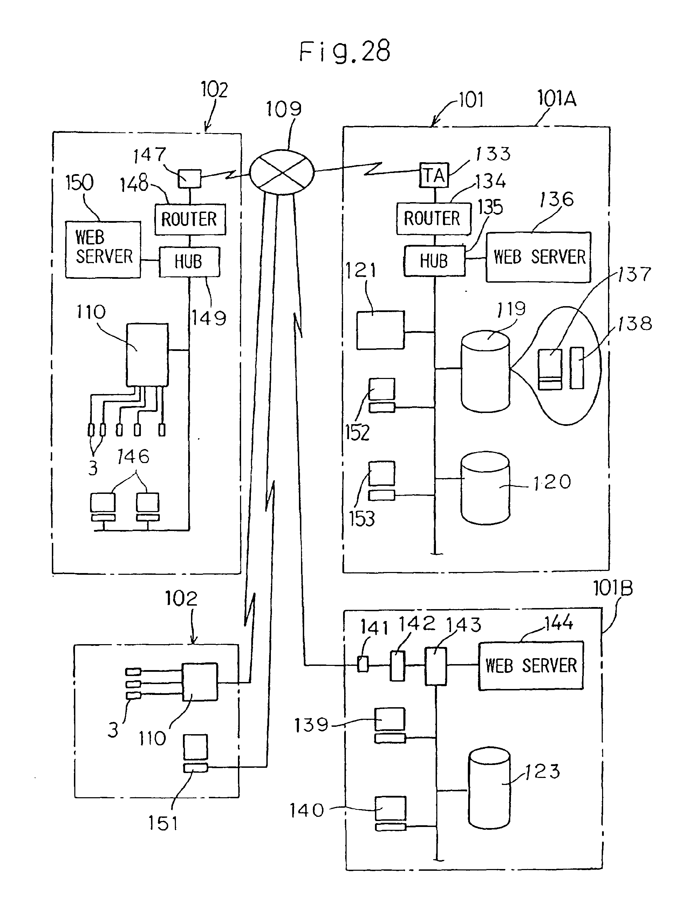

Fig. 28 illustrates a hardware structure of the machine component monitoring and diagnosing system for the machine components. As shown therein, the business establishment 101A of the technical and research department of the manufacturing and selling corporation has a local network area in which the examining section 121, a plurality of computers 152 and 153 and the databases 119 and 120 are connected together, which is in turn connected with the line 109 through a terminal adapter 133, a router 134 and a hub 135, all of which are supervised by a web server 136. The databases 119 and 120 are constituted by a computer 137 and a large capacity storage means 138. The router 134, the hub 135 and the web server 136 and others altogether constitute the sensor information receiving means 113 shown in Fig. 3. Also, the diagnosing means 114 described hereinbefore is constituted by the computer 152 and others.

A sales section which is the principal of the business establishment 101B of the sales and production department of the manufacturing and selling corporation also has a local area network in which a plurality of computers 139 and 140, a database 123 and others are connected together, which is in turn connected with the line 109 through a terminal adapter 141, a router 142 and a hub 143, all of which are supervised by a web server 144. The computers 139 and 140 form the merchandise information adding means 115, the diagnosis result information transmitting means 116, the order processing means 124 and the decision making means 127 shown in Fig. 26.

One of the business establishment 102 of the client corporation has a local area network in which a plurality of computers 146 and a controller and others that serve as the sensor information transmitting means 110 are connected together, which is in turn connected with the line 109 through a terminal adapter 147, a router 148 and a hub 149, all of which are supervised by a web server 150. The computer 146 forms the diagnosis result information receiving means 131.

Another one of the business establishments 102 of the client corporation has a controller that serves as the sensor information transmitting means 110, which is connected directly with the line 109, and also has a computer 151 connected directly with the line 109, which forms the diagnosis result information receiving means 131.

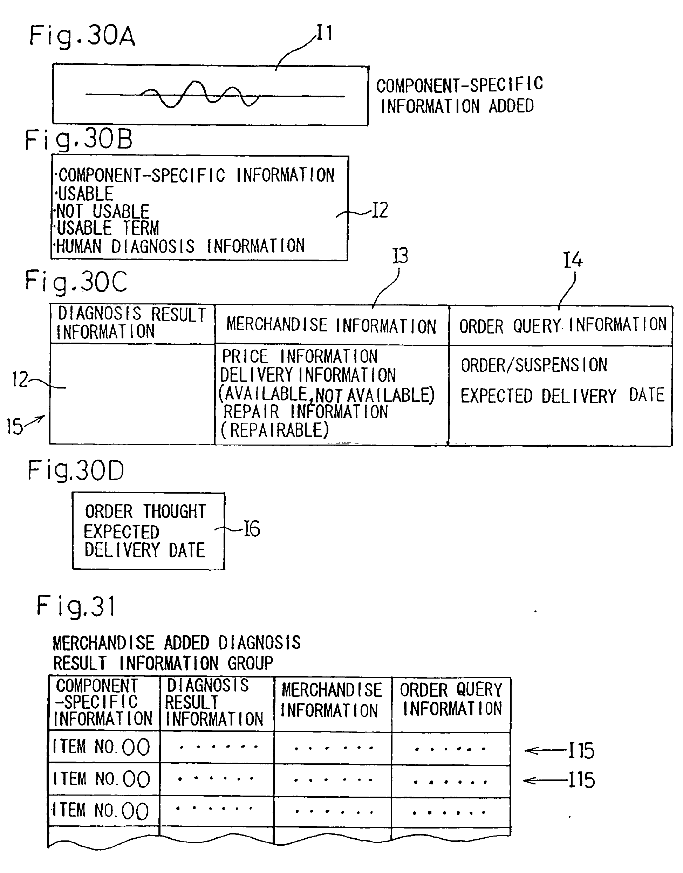

The flow of processing in this embodiment of the present invention will be described with particular reference to Fig. 26 and Figs. 30A to 30D.

Detection information from the sensors 3 monitoring the machine components 1 owned by the client corporation is transmitted as the sensor information I1 to the line 109 by means of the sensor information transmitting means 110. (Fig. 30A). The sensor information I1 contains data necessary to specify machine components such as, for example, data on component type and data on place of use of such component.

This sensor information I1 is received by the sensor information receiving means 113 at the manufacturing and selling corporation 101 and diagnosed by the diagnosing means 114. For this diagnosis, information registered in the databases 119 and 120 are utilized. Diagnosis result information I2 (Fig. 30B) contains, in addition to the component specifying information, data indicative of whether the component can be usable or unusable, and data on the term of use if the component is determined usable, and, optionally, a human diagnosis information.

The merchandise information I3 is then added to the diagnosis result information I2 by the merchandise information adding means 115 by referring to the database 123, and the order query information I4 is also added thereto. The merchandise information 13 contains price information and delivery data information. The order query information I4 contains information necessary to prompt inputting for ascertaining the will, i.e. indent or reserve, and information on query as to the date of delivery.

The merchandise information added diagnosis result information I5 including the diagnosis result information I2, the merchandise information I3 and the order query information 14 is transmitted from the diagnosis result information transmitting means 116 to the line 109.

The client corporation receives the merchandise information added diagnosis result information 15 through the diagnosis result information receiving means 131, examine this information 15 and then causes the order processing section 132 to transmit the agreement information 16 to the line 109. The agreement information 16 is information that places the order and, therefore, includes information descriptive of the will to order and information on the desired date of delivery.

This agreement information I6 is received by the diagnosis result information transmitting means 116 and processed by the order processing means 124 and processed so that the delivery and the decision can be made as hereinbefore described.

Although in the foregoing description, the merchandise information added diagnosis result information I5 has been described as associated with one machine component 1, the merchandise information added diagnosis result information I5 is generally transmitted from the diagnosis result information transmitting means 116 in the form of a group of the merchandise information added diagnosis result information consisting of a table or list enumerating the plural machine components as shown in Fig. 31. Also, the agreement information 16 may be of a design in which with respect to the group of the merchandise information added diagnosis result information a response can be made together with the information on the will to order and the information on the desired date of delivery, or in which with respect to the group of the merchandise information added diagnosis result information the agreement information can be re-edited in the client corporation before transmission.

Also, in the practice of the present invention, arrangement may be made that the diagnosis result information transmitting means transmits the diagnosis result information with no merchandise information added and also transmit a bulk of the estimate information including the merchandise information for a specific period of days.

With the machine component monitoring and diagnosing system of the present invention, the client corporation can acquire in situ the merchandise information on the machine components 1 together with an accurate result of diagnosis of the machine components 1 and can therefore quickly place an order and inform the expected delivery date. Accordingly, the cost which would be incurred in monitoring and diagnosing the machine components 1 can be reduced advantageously. The manufacturing and selling corporation of the machine components I can reduce the number of the machine components in stock because of the order made in advance by the client corporation and maximize a proper production planning.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A machine component monitoring system for monitoring machine components (1) used in a machine system provided with a plurality of such machine components each having rolling elements (13), which system comprises:
control means;
a plurality of determining units (4) each connected with a plurality of sensors (3), said determining units being connected with the control means (5), each of the sensors being arranged on the respective machine component for detecting an influence signal resulting from passage of the rolling elements induced in the machine component, each of the determining units being operable to determine according to a predetermined process set-up condition status such as presence or absence of an abnormality, lifetime and others of the machine component, which is associated with such sensor, in reference to an output signal from the associated sensor; and
said control means being operable to collect results of determination performed by each of the determining units,
**characterized in that**
each of the determining units determines the presence or absence of an abnormality in a sensor waveform which is the output signal from the associated sensor by comparing periods of sinusoidal waveforms of the plural sensors connected therewith with each other and, in the event that a period of a waveform deviates from those of others, detects a sensor waveform abnormality resulting from the sensor waveform and then determines the presence of a rotation abnormality as the abnormality in the sensor waveform, and
each of the determining unitsfurther determines whether or not a defect signal component contained in the sensor waveform deviates from a predefined range and, in the event that the defect signal has been determined as deviating from the predefined range, determines the presence of a defect waveform abnormality as the abnormality in the sensor waveform, and removes a high frequency component which is a noise component and a main signal component which is a sinusoidal waveform from the output signal by a low pass filter and a high pass filter, respectively to extract the defect signal component resulting from an abnormality of machine components.

2. The machine component monitoring system as claimed in Claim 1, wherein each of the determining units has a capability of detecting presence or absence of a determiner abnormality, which is an abnormality resulting from the respective determining unit itself.

3. The machine component monitoring system as claimed in Claim 1 or 2, wherein the control means makes a transmission request sequentially to the determining units and each of the determining units transmit a result of determination to the control means in response to the transmission request.

4. The machine component monitoring system as claimed in any one of Claims 1-3, wherein the control means has a capability of commanding setting and changing of the process set-up condition for each of the determining units and each of the determining units is capable of changing the process set-up condition according to the command from the control means.

5. The machine component monitoring system as claimed in any one of Claims 1-4, wherein each of the determining units has a plurality of waveform processing means for processing the sensor waveform according to different waveform processing techniques and has a capability of selecting one of the waveform processing means that is to be used for processing the sensor waveform, and the control means has a capability of applying a selection command necessary to select one of the waveform processing means for the particular determining unit.

6. The machine component monitoring system as claimed in any one of Claims 1-4, wherein each of the determining units has a plurality of waveform processing means for processing the sensor waveform according to different waveform processing techniques and has a capability of selecting one of the waveform processing means for each of the sensors.

7. The machine component monitoring system as claimed in any one of Claims 1-6, wherein wiring used to connect the determining units and the associated sensors is used in the form of a sheathed sensor cable having a sheath having a water proof, a dust proof, a rust proof, a moisture proof, and resistances to oil, heat and electromagnetic noises.

8. The machine component monitoring system as claimed in any one of Claims 1-7, wherein each of the determining units has a relay terminal, and the determining units are sequentially wired together through the respective relay terminals.

9. The machine component monitoring system as claimed in any one of Claims 1-8, wherein the machine system is a aggregation of a plurality of machine system constituent elements each including the plural machine components, and wherein each of the determining units is used one for each of the machine system constituent elements and the sensor connected with each of the determining units is arranged on the machine component provided in one of the machine system constituent elements that is associated with such determining unit.

10. The machine component monitoring system as claimed in any one of Claims 1-9, wherein the control means has an automatic monitoring mode and a terminal operated mode, wherein the automatic monitoring mode is a mode in which a result of determination performed by each of the determining units is acquired by sequentially issuing a transmission request to request the respective determining unit to send the result of determination and the terminal operated mode is a mode in which by making a transmission request to request the respective determining unit to send the result of determination and information other than the result of determination a response thereto is acquired.

11. The machine component monitoring system as claimed in any one of Claims 1-10, wherein each of the determining units captures as digital data the sensor waveform which is the output signal from each of the sensors connected therewith, and the control means includes a waveform data storage means for storing the sensor waveform that is the digital data captured by each of the determining units.

12. The machine component monitoring system as claimed in any one of Claims 1-11, further comprising a maintenance information generating means for generating predetermined maintenance information associated with the machine component, based on a result of determination performed by each of the determining units.

13. The machine component monitoring system as claimed in any one of Claims 1-12, further comprising information processing means positioned at a location remote from the control means and connected with the control means through a communication network, and wherein the control means has a capability of collecting not only a result of determination performed by each of the determining units, but also a sensor waveform inputted to each determining unit, said information processing means including a remote data collecting means for collecting the result of determination and the sensor waveform which the control means has collected from each of the determining units.

14. The machine component monitoring system as claimed in any one of Claims 1-13, wherein each of sensors is arranged on the respective machine component for detecting an influence signal resulting from passage of the rolling element induced in the respective machine component, and each of the determining units includes a filtering means for extracting a component of a defect signal from a sensor waveform that is an output signal from the sensor connected with such determining unit, and a determining section operable to compare the detected defect signal with a predefined range to determine presence or absence of an abnormality;
said filtering means extracting the defect signal component by repeatedly performing at predetermined interval a process of retrieving a predetermined time range data from a data stream of the sensor waveform and determining a difference between maximum and minimum values of the retrieved data.

15. The machine component monitoring system as claimed in any one of Claims 1-14, wherein the determining unit which comprises:
a selector for sequentially changing one of a plurality of input channels to which analog sensor waveform signals are inputted, an A/D converting means for performing an A/D conversion on an output from the selector;
a first memory for storing the waveform signal which has been A/D converted;
a processor for waveform processing the waveform signal, stored in the first memory, according to a process set-up condition and performing a predetermined determination from a result of waveform processing according to a predefined range;
a second memory for storing the result of the waveform processing and the result of determination process performed by the processor; and
an interface section for transmitting contents stored in the first and second memories in response to a request command applied thereto from an external circuit.

16. A machine component monitoring and diagnosing system for monitoring and diagnosing a machine component having rolling elements, which system comprises:
the machine component monitoring system as claimed in any one of Claims 1-15;
a sensor information transmitting means for transmitting information detected by the sensor which detects a factor associated with lifetime of the machine component incorporated in a machine used by a client corporation located at a remote place or information obtained by processing the raw information detected by the sensor, to a line;
a sensor information receiving means installed at a business establishment of a manufacturing and selling corporation, which manufactures and sells the machine component, for receiving the sensor information transmitted through the line;
a diagnosing means for diagnosing a state of the lifetime of the machine component in reference to the sensor information received by the sensor information receiving means;
a diagnosis result information transmitting means for transmitting diagnosis result information given by the diagnosing means to the line; and
a diagnosis result information receiving means installed at the business establishment of the client corporation for receiving the diagnosis result information transmitted through the line.

17. A machine component monitoring and diagnosing system for monitoring and diagnosing a machine component having rolling elements, which system comprises:
the machine component monitoring system as claimed in any one of Claims 1-15;
a sensor information receiving means installed at a business establishment of a manufacturing and selling corporation manufacturing and selling the machine component for receiving through a line information detected by a sensor for detecting a factor associated with lifetime of the machine component incorporated in a machine used by a client corporation located at a remote place;
a diagnosing means for diagnosing a state of the lifetime of the machine component in reference to the sensor information received by sensor information receiving means; and
a diagnosis result information transmitting means for transmitting information on a result of diagnosis by the diagnosing means to the line.

18. The machine component monitoring and diagnosing system as claimed in Claim 16, wherein the sensor information transmitting means includes an information collecting section for collecting the information detected by each of sensors provided one for each of a plurality of machine components, and an information transmitting section for transmitting the information, collected by the information collecting section, to the line.

19. The machine component monitoring and diagnosing system as claimed in Claims 16-18, wherein the diagnosis result information brought by the diagnosing means includes a result of determination of whether or not the machine component is properly usable and a result of determination of an available term of use if the machine component has been determined usable properly.

20. The machine component monitoring and diagnosing system as claimed in any one of Claims 16-19, wherein the sensor is operable to detect at least one of vibration waveform, temperature and image.

21. The machine component monitoring and diagnosing system as claimed in any one Claims 16-20, wherein the diagnosing means utilizes for diagnosis a database in which specifications for each type of the machine components and examples of diagnosis are registered.

22. The machine component monitoring and diagnosing system as claimed in any one of Claims 16-21, wherein the diagnosing means utilizes for diagnosis a database in which environments of use of the machine components are registered.

23. The machine component monitoring and diagnosing system as claimed in any one of Claims 16-22, wherein the diagnosing means includes an examining section for automatically performing, when the sensor information is in putted, determination of whether or not at least the machine component is properly usable, and a human diagnosing means for adding a result of diagnosis performed by a human to the result of diagnosis performed by the examining section, or modifying it based on the result of diagnosis performed by a human.

24. The machine component monitoring and diagnosing system as claimed in Claim 16, wherein each of the sensor information transmitting means and the sensor information receiving means is capable of performing a bi-directional communication, and the sensor information transmitting means transmits the sensor information in response to a request signal from the sensor information receiving means.

25. The machine component monitoring an diagnosing system as claimed in Claim 16, wherein the sensor information transmitting means transmits the sensor information on a regular basis and transmits it even when a predetermined abnormality signal is received.

26. The machine component monitoring and diagnosing system as claimed in any one of Claims 16, 18, 24 and 25, wherein the machine in the business establishment of the client corporation is a machine having a plurality of shafts and wherein the machine component to be detected by the sensor is a bearing supporting each of the shafts, said sensor information transmitting means transmitting sensor information on these plural bearings to the line.

27. A machine component monitoring, diagnosing and selling system which comprises:
the machine component monitoring and diagnosing system as claimed in any one of Claims 16 and 18-26; and
a merchandise information adding means for generating merchandise information associated with the machine component to be diagnosed according diagnosis result information of the diagnosing means and for adding this merchandise information to the diagnosis result information;
wherein the diagnosis result information transmitting means transmits to the line merchandise information added diagnosis result information which is the diagnosis result information added with the merchandise information, and the diagnosis result information receiving means receives the merchandise information added diagnosis result information transmitted through the line.

28. A machine component monitoring, diagnosing and selling system for monitoring, diagnosing and selling a machine component having rolling elements, which system comprises:
the machine component monitoring diagnosing system as claimed in Claim 17; and
a merchandise information adding means for generating merchandise information associated with the machine component to be diagnosed according diagnosis result information of the diagnosing means and for adding this merchandise information to the diagnosis result information;
wherein the diagnosis result information transmitting means transmits to the line merchandise information added diagnosis result information which is the diagnosis result information added with the merchandise information.

29. The machine component monitoring, diagnosing and selling system as claimed in Claims 27 or 28, wherein the merchandise information added by the merchandise information adding means includes price information and delivery date information.

30. The machine component monitoring, diagnosing and selling system as claimed in any one of Claims 27-29, wherein the merchandise information added by the merchandise information adding means includes information asking about a will to order, wherein the diagnosis result information transmitting means includes information asking about the will to order in the merchandise information added diagnosis result information, and wherein the diagnosis result information transmitting means is capable of conducting a bi-directional communication and capable of receiving agreement information with respect to the information asking about the will to order contained in the merchandise information added diagnosis result information.

31. The machine component monitoring, diagnosing and selling system as claimed in Claim 30, further comprising an order processing means for generating arrangement information of delivery of the machine component according to contents ordered in the agreement information that is received by the diagnosis result information transmitting means.

32. The machine component monitoring, diagnosing and selling system as claimed in Claim 31, further comprising an electronic decision making means for making a decision according to electronic information in dependence on contents of the order contained in the agreement information received by the diagnosis result information transmitting means.

33. The machine component monitoring, diagnosing and selling system as claimed in any one of Claims 27-32, further comprising a diagnosis result utilizing production planning support means utilizing the diagnosis result of the diagnosing means in planning a production of the machine component.

34. The machine component monitoring, diagnosing and selling system as claimed in Claim 27, wherein the sensor information transmitting means includes an information collecting section for collecting the information detected by each of sensors provided one for each of a plurality of machine components, and an information transmitting section for transmitting the information, collected by the information collecting section, to the line.

35. The machine component monitoring and diagnosing system as claimed in any one of Claims 27-34, wherein the diagnosis result information brought by the diagnosing means includes a result of determination of whether or not the machine component is properly usable and a result of determination of an available term of use if the machine component has been determined usable properly.

36. The machine component monitoring and diagnosing system as claimed in any one of Claims 27-35, wherein the sensor is operable to detect at least one of vibration waveform, temperature and image.

37. The machine component monitoring and diagnosing system as claimed in any one of Claims 27-36, wherein the diagnosing means utilizes for diagnosis a database in which specifications for each type of the machine components and examples of diagnosis are registered.

38. The machine component monitoring and diagnosing system as claimed in any one of Claims 27-37, wherein the diagnosing means utilizes for diagnosis a database in which environments of use of the machine components are registered.

39. The machine component monitoring and diagnosing system as claimed in any one of Claims 27-38, wherein the diagnosing means includes an examining section for automatically performing, when the sensor information is in putted, determination of whether or not at least the machine component is properly usable, and a human diagnosing means for adding a result of diagnosis performed by a human or modifying based on the result of diagnosis performed by a human.

40. The machine component monitoring and diagnosing system as claimed in Claim 27, wherein each of the sensor information transmitting means and the sensor information receiving means is capable of performing a bi-directional communication, and the sensor information transmitting means transmits the sensor information in response to a request signal from the sensor information receiving means.

41. The machine component monitoring an diagnosing system as claimed in Claim 27, wherein the sensor information transmitting means transmits the sensor information on a regular basis and transmits it even when a predetermined abnormality signal is received.

42. The machine component monitoring and diagnosing system as claimed in any one of Claims 27, 34, 40 and 41, wherein the machine in the business establishment of the client corporation is a machine having a plurality of shafts and wherein the machine component to be detected by the sensor is a bearing supporting each of the shafts, said sensor information transmitting means transmitting sensor information on these plural bearings to the line.

## Patentansprüche

1. Maschinenkomponentenüberwachungssystem zum Überwachen von Maschinenkomponenten (1), die in einem Maschinensystem verwendet werden, das mit mehreren solcher Maschinenkomponenten ausgestattet ist, die jeweils Rollenelemente (13) aufweisen, wobei das System Folgendes umfasst:
ein Steuerungsmittel;
mehrere Feststellungseinheiten (4), die jeweils mit mehreren Sensoren (3) verbunden sind, wobei die Feststellungseinheiten mit dem Steuerungsmittel (5) verbunden sind, wobei jeder der Sensoren an der jeweiligen Maschinenkomponente angeordnet ist, um ein aus dem Vorbeibewegen der Rollenelemente resultierendes Einflusssignal, das in der Maschinenkomponente hervorgerufen wird, zu detektieren, wobei jede der Feststellungseinheiten dafür geeignet ist, gemäß einer zuvor festgelegten Prozesseinrichtung einen Zustandsstatus, wie zum Beispiel das Vorliegen oder Fehlen einer Anomalie, die Grenznutzungsdauer und Sonstiges der Maschinenkomponente, die dem betreffenden Sensor zugeordnet ist, anhand eines Ausgangssignal von dem zugehörigen Sensor festzustellen; und
wobei das Steuerungsmittel dafür geeignet ist, die Ergebnisse von Feststellungen, die durch jede der Feststellungseinheiten getroffen wurden, zu erfassen,
**dadurch gekennzeichnet, dass**:
jede der Feststellungseinheiten das Vorliegen oder Fehlen einer Anomalie in einer Sensorwellenform, bei der es sich um das Ausgangssignal des zugehörigen Sensors handelt, feststellt, indem sie Zeiträume von Sinuswellenformen der mehreren mit ihnen verbundenen Sensoren miteinander vergleicht und, falls ein Zeitraum einer Wellenform von den Zeiträumen anderer Wellenformen abweicht, eine aus der Sensorwellenform resultierende Sensorwellenformanomalie detektiert und dann das Vorliegen einer Rotationsanomalie als die Anomalie in der Sensorwellenform feststellt, und
jede der Feststellungseinheiten des Weiteren feststellt, ob eine in der Sensorwellenform enthaltene Defektsignalkomponente von einem vorgegebenen Bereich abweicht oder nicht, und falls festgestellt wurde, dass das Defektsignal von dem vorgegebenen Bereich abweicht, das Vorliegen einer Defektwellenformanomalie als die Anomalie in der Sensorwellenform feststellt und eine Hochfrequenzkomponente, bei der es sich um eine Rauschkomponente handelt, und eine Hauptsignalkomponente, bei der es sich um eine Sinuswellenform handelt, mittels eines Tiefpassfilters bzw. eines Hochpassfilters aus dem Ausgangssignal entfernt, um die Defektsignalkomponente, die aus einer Anomalie von Maschinenkomponenten resultiert, zu extrahieren.

2. Maschinenkomponentenüberwachungssystem nach Anspruch 1, wobei jede der Feststellungseinheiten befähigt ist, das Vorliegen oder Fehlen einer Feststellungsvorrichtungsanomalie zu detektieren, bei der es sich um eine Anomalie handelt, die aus der jeweiligen Feststellungseinheit selbst resultiert.

3. Maschinenkomponentenüberwachungssystem nach Anspruch 1 oder 2, wobei das Steuerungsmittel der Reihe nach eine Sendeanforderung an die Feststellungseinheiten ausgibt und jede der Feststellungseinheiten, in Reaktion auf die Sendeanforderung, ein Feststellungsergebnis an das Steuerungsmittel sendet.

4. Maschinenkomponentenüberwachungssystem nach einem der Ansprüche 1-3, wobei das Steuerungsmittel befähigt ist, das Einstellen und Ändern des Prozesseinrichtungszustandes für jede der Feststellungseinheiten zu befehlen, und jede der Feststellungseinheiten in der Lage ist, den Prozesseinrichtungszustand gemäß dem Befehl von dem Steuerungsmittel zu ändern.

5. Maschinenkomponentenüberwachungssystem nach einem der Ansprüche 1-4, wobei jede der Feststellungseinheiten mehrere Wellenformverarbeitungsmittel zum Verarbeiten der Sensorwellenform gemäß verschiedenen Wellenformverarbeitungstechniken aufweist und befähigt ist, eines der Wellenformverarbeitungsmittel, das für die Verarbeitung der Sensorwellenform verwendet werden soll, auszuwählen, und das Steuerungsmittel befähigt ist, einen Auswahlbefehl anzuwenden, der erforderlich ist, um eines der Wellenformverarbeitungsmittel für die konkrete Feststellungseinheit auszuwählen.

6. Maschinenkomponentenüberwachungssystem nach einem der Ansprüche 1-4, wobei jede der Feststellungseinheiten mehrere Wellenformverarbeitungsmittel zum Verarbeiten der Sensorwellenform gemäß verschiedenen Wellenformverarbeitungstechniken aufweist und befähigt ist, eines der Wellenformverarbeitungsmittel für jeden der Sensoren auszuwählen.

7. Maschinenkomponentenüberwachungssystem nach einem der Ansprüche 1-6, wobei Verdrahtungen, die zum Verbinden der Feststellungseinheiten und der zugehörigen Sensoren verwendet werden, in der Form eines ummantelten Sensorkabels verwendet werden, das eine Ummantelung aufweist, die wasserdicht, staubdicht, rostdicht und feuchtigkeitsdicht ist und gegen Öl, Wärme und elektromagnetisches Rauschen beständig ist.

8. Maschinenkomponentenüberwachungssystem nach einem der Ansprüche 1-7, wobei jede der Feststellungseinheiten eine Relaisklemme aufweist und die Feststellungseinheiten über die jeweiligen Relaisklemmen sequenziell miteinander verdrahtet sind.

9. Maschinenkomponentenüberwachungssystem nach einem der Ansprüche 1-8, wobei das Maschinensystem eine Zusammenstellung von mehreren Maschinensystem-Einzelelementen ist, die jeweils die mehreren Maschinenkomponenten enthalten, und wobei jeweils eine der Feststellungseinheiten für jeweils eines der Maschinensystem-Einzelelemente verwendet wird und der mit jeder der Feststellungseinheiten verbundene Sensor an der Maschinenkomponente angeordnet ist, die in einem der Maschinensystem-Einzelelemente angeordnet ist, das der betreffenden Feststellungseinheit zugeordnet ist.

10. Maschinenkomponentenüberwachungssystem nach einem der Ansprüche 1-9, wobei das Steuerungsmittel einen automatischen Überwachungsmodus und einen Terminal-betätigten Modus aufweist, wobei der automatische Überwachungsmodus ein Modus ist, in dem ein Ergebnis einer Feststellung, die durch jede der Feststellungseinheiten getroffen wird, erhalten wird, indem sequenziell eine Sendeanforderung ausgegeben wird, um die jeweilige Feststellungseinheit aufzufordern, das Feststellungsergebnis zu senden, und der Terminal-betätigte Modus ist ein Modus, in dem durch Ausgeben einer Sendeanforderung zum Auffordern der jeweiligen Feststellungseinheit, das Feststellungsergebnis und weitere Informationen neben dem Feststellungsergebnis zu senden, eine Antwort darauf erhalten wird.

11. Maschinenkomponentenüberwachungssystem nach einem der Ansprüche 1-10, wobei jede der Feststellungseinheiten die Sensorwellenform, die das Ausgangssignal von jedem der mit ihnen verbundenen Sensoren ist, als digitale Daten erfasst und das Steuerungsmittel ein Wellenformdatenspeichermittel zum Speichern der Sensorwellenform enthält, bei der es sich um die digitalen Daten handelt, die durch jede der Feststellungseinheiten erfasst werden.

12. Maschinenkomponentenüberwachungssystem nach einem der Ansprüche 1-11, das des Weiteren ein Wartungsinformationserzeugungsmittel zum Erzeugen zuvor festgelegter Wartungsinformationen im Zusammenhang mit der Maschinenkomponente auf der Grundlage eines Ergebnisses einer durch jede der Feststellungseinheiten vorgenommenen Feststellung umfasst.

13. Maschinenkomponentenüberwachungssystem nach einem der Ansprüche 1-12, das des Weiteren ein Informationsverarbeitungsmittel umfasst, das an einer von dem Steuerungsmittel räumlich entfernten Position angeordnet ist und mit dem Steuerungsmittel über ein Kommunikationsnetz verbunden ist, und wobei das Steuerungsmittel befähigt ist, nicht nur ein Ergebnis einer durch jede der Feststellungseinheiten getroffenen Feststellung, sondern auch eine in jede Feststellungseinheit eingegebene Sensorwellenform zu erfassen, wobei das Informationsverarbeitungsmittel ein Ferndatenerfassungsmittel enthält, um das Feststellungsergebnis und die Sensorwellenform, die das Steuerungsmittel von jeder der Feststellungseinheiten erfasst hat, zu erfassen.

14. Maschinenkomponentenüberwachungssystem nach einem der Ansprüche 1-13, wobei jeder der Sensoren an der jeweiligen Maschinenkomponente angeordnet ist, um ein aus dem Vorbeibewegen des Rollenelements resultierendes Einflusssignal, das in der jeweiligen Maschinenkomponente hervorgerufen wird, zu detektieren, und jede der Feststellungseinheiten ein Filtermittel enthält, um eine Komponente eines Defektsignals aus einer Sensorwellenform zu extrahieren, bei der es sich um ein Ausgangssignal des mit der betreffenden Feststellungseinheit verbundenen Sensors handelt, sowie einen Feststellungsabschnitt enthält, der dafür geeignet ist, das detektierte Defektsignal mit einem vorgegebenen Bereich zu vergleichen, um das Vorliegen oder Fehlen einer Anomalie festzustellen;
wobei das Filtermittel die Defektsignalkomponente extrahiert, indem es wiederholt in einem zuvor festgelegten Intervall einen Prozess des Abrufens zuvor festgelegter Zeitbereichsdaten aus einem Datenstrom der Sensorwellenform und des Feststellens einer Differenz zwischen größten und kleinsten Werten der abgerufenen Daten ausführt.

15. Maschinenkomponentenüberwachungssystem nach einem der Ansprüche 1-14, wobei die Feststellungseinheit Folgendes umfasst:
eine Auswahlvorrichtung zum sequenziellen Ändern eines von mehreren Eingangskanälen, in den analoge Sensorwellenformsignale eingespeist werden; ein A-D-Wandlermittel zum Ausführen einer A-D-Wandlung an einem Ausgangssignal aus der Auswahlvorrichtung;
einen ersten Speicher zum Speichern des Wellenformsignals, das einer A-D-Wandlung unterzogen wurde;
einen Prozessor zur Wellenformverarbeitung des in dem ersten Speicher gespeicherten Wellenformsignals gemäß einem Prozesseinrichtungszustand und Treffen einer zuvor festgelegten Feststellung anhand eines Ergebnisses der Wellenformverarbeitung gemäß einem vorgegebenen Bereich;
einen zweiten Speicher zum Speichern des Ergebnisses der Wellenformverarbeitung und des Ergebnisses des durch den Prozessor ausgeführten Feststellungsprozesses; und
einen Schnittstellenabschnitt zum Senden von in dem ersten und dem zweiten Speicher gespeichertem Inhalt in Reaktion auf einen von einer externen Schaltung an ihn angelegten Anforderungsbefehl.

16. Maschinenkomponentenüberwachungs- und -diagnosesystem zum Überwachen und Diagnostizieren einer Maschinenkomponente, die Rollenelemente aufweist, wobei das System Folgendes umfasst:
das Maschinenkomponentenüberwachungssystem nach einem der Ansprüche 1-15;
ein Sensorinformationssendemittel zum Senden von Informationen, die durch den Sensor detektiert wurden, der einen Faktor detektiert, welcher der Grenznutzungsdauer der Maschinenkomponente zugeordnet ist, die in eine Maschine integriert ist, die von einem Kundenunternehmen verwendet wird, das sich an einem räumlich abgesetzten Ort befindet, oder von Informationen, die durch Verarbeiten der durch den Sensor detektierten Rohinformationen erhalten werden, an eine Leitung;
ein Sensorinformationsempfangsmittel, das in einer Geschäftsniederlassung einer Produktions- und Verkaufsunternehmung installiert ist, welche die Maschinenkomponente herstellt und verkauft, zum Empfangen der über die Leitung gesendeten Sensorinformationen;
ein Diagnosemittel zum Diagnostizieren eines Zustands der Grenznutzungsdauer der Maschinenkomponente anhand der durch das Sensorinformationsempfangsmittel empfangenen Sensorinformationen;
ein Diagnoseergebnisinformationssendemittel zum Senden von durch das Diagnosemittel erhaltenen Diagnoseergebnisinformationen an die Leitung; und
ein Diagnoseergebnisinformationsempfangsmittel, das in der Geschäftsniederlassung der Kundenunternehmung installiert ist, zum Empfangen der über die Leitung gesendeten Diagnoseergebnisinformationen.

17. Maschinenkomponentenüberwachungs- und -diagnosesystem zum Überwachen und Diagnostizieren einer Maschinenkomponente, die Rollenelemente aufweist, wobei das System Folgendes umfasst:
das Maschinenkomponentenüberwachungssystem nach einem der Ansprüche 1-15;
ein Sensorinformationsempfangsmittel, das in einer Geschäftsniederlassung einer Produktions- und Verkaufsunternehmung installiert ist, welche die Maschinenkomponente herstellt und verkauft, zum Empfangen - über eine Leitung - von Informationen, die durch einen Sensor detektiert wurden, der dem Detektieren eines Faktors dient, welcher der Grenznutzungsdauer der Maschinenkomponente zugeordnet ist, die in eine Maschine integriert ist, die durch eine Kundenunternehmung verwendet wird, die sich an einem räumlich abgesetzten Platz befindet;
ein Diagnosemittel zum Diagnostizieren eines Zustands der Grenznutzungsdauer der Maschinenkomponente anhand der durch das Sensorinformationsempfangsmittel empfangenen Sensorinformationen; und
ein Diagnoseergebnisinformationssendemittel zum Senden von Informationen bezüglich eines Ergebnisses einer Diagnose durch das Diagnosemittel an die Leitung.

18. Maschinenkomponentenüberwachungs- und -diagnosesystem nach Anspruch 16, wobei das Sensorinformationssendemittel einen Informationserfassungsabschnitt zum Erfassen der Informationen enthält, die durch jeden der Sensoren detektiert wurden, die für eine von mehreren Maschinenkomponenten vorgesehen sind, sowie einen Informationssendeabschnitt zum Senden der durch den Informationserfassungsabschnitt erfassten Informationen an die Leitung enthält.

19. Maschinenkomponentenüberwachungs- und -diagnosesystem nach den Ansprüchen 16-18, wobei die durch das Diagnosemittel erbrachten Diagnoseergebnisinformationen ein Ergebnis der Feststellung enthalten, ob die Maschinenkomponente bestimmungsgemäß verwendbar ist oder nicht, sowie ein Ergebnis der Feststellung einer verfügbaren Nutzungsdauer enthalten, wenn die Maschinenkomponente als bestimmungsgemäß verwendbar festgestellt wurde.

20. Maschinenkomponentenüberwachungs- und -diagnosesystem nach einem der Ansprüche 16-19, wobei der Sensor dafür geeignet ist, eine Vibrationswellenform und/oder eine Temperatur und/oder ein Bild zu detektieren.

21. Maschinenkomponentenüberwachungs- und -diagnosesystem nach einem der Ansprüche 16-20, wobei das Diagnosemittel zur Diagnose eine Datenbank nutzt, in der Spezifikationen für jeden Typ der Maschinenkomponenten und Diagnosebeispiele registriert sind.

22. Maschinenkomponentenüberwachungs- und -diagnosesystem nach einem der Ansprüche 16-21, wobei das Diagnosemittel zur Diagnose eine Datenbank nutzt, in der Einsatzumgebungen der Maschinenkomponenten registriert sind.

23. Maschinenkomponentenüberwachungs- und -diagnosesystem nach einem der Ansprüche 16-22, wobei das Diagnosemittel einen Untersuchungsabschnitt enthält, um, wenn die Sensorinformationen eingespeist werden, automatisch festzustellen, ob mindestens die Maschinenkomponente bestimmungsgemäß nutzbar ist oder nicht, sowie ein durch Menschenhand bedientes Diagnosemittel enthält, um ein Ergebnis einer durch einen Menschen durchgeführten Diagnose zu dem Ergebnis der durch den Untersuchungsabschnitt durchgeführten Diagnose hinzuzufügen oder es auf der Grundlage des Ergebnisses der durch einen Menschen durchgeführten Diagnose zu modifizieren.

24. Maschinenkomponentenüberwachungs- und -diagnosesystem nach Anspruch 16, wobei sowohl das Sensorinformationssendemittel als auch das Sensorinformationsempfangsmittel in der Lage sind, eine bidirektionale Kommunikation auszuführen, und das Sensorinformationssendemittel die Sensorinformationen in Reaktion auf ein Anforderungssignal von dem Sensorinformationsempfangsmittel sendet.

25. Maschinenkomponentenüberwachungs- und -diagnosesystem nach Anspruch 16, wobei das Sensorinformationssendemittel die Sensorinformationen regelmäßig sendet und sie selbst dann sendet, wenn ein zuvor festgelegtes Anomaliesignal empfangen wird.

26. Maschinenkomponentenüberwachungs- und -diagnosesystem nach einem der Ansprüche 16, 18, 24 und 25, wobei die Maschine in der Geschäftsniederlassung der Kundenunternehmung eine Maschine ist, die mehrere Wellen aufweist, und wobei die durch den Sensor zu detektierende Maschinenkomponente ein Lager ist, in dem jede der Wellen gelagert ist, wobei das Sensorinformationssendemittel Sensorinformationen bezüglich dieser mehreren Lager an die Leitung sendet.

27. Maschinenkomponentenüberwachungs-, -diagnose- und - verkaufssystem, das Folgendes umfasst:
das Maschinenkomponentenüberwachungs- und - diagnosesystem nach einem der Ansprüche 16 und 18-26; und
ein Wareninformationshinzufügungsmittel zum Erzeugen von Wareninformationen, die mit der zu diagnostizierenden Maschinenkomponente verknüpft sind, gemäß Diagnoseergebnisinformationen des Diagnosemittels und zum Hinzufügen dieser Wareninformationen zu den Diagnoseergebnisinformationen;
wobei das Diagnoseergebnisinformationssendemittel um Wareninformationen ergänzte Diagnoseergebnisinformationen an die Leitung sendet, wobei es sich um die Diagnoseergebnisinformationen handelt, denen Wareninformationen hinzugefügt wurden, und das Diagnoseergebnisinformationsempfangsmittel die über die Leitung gesendeten, um Wareninformationen ergänzten Diagnoseergebnisinformationen empfängt.

28. Maschinenkomponentenüberwachungs-, -diagnose- und - verkaufssystem zum Überwachen, Diagnostizieren und Verkaufen einer Maschinenkomponente, die Rollenelemente aufweist, wobei das System Folgendes umfasst:
das Maschinenkomponentenüberwachungs- und - diagnosesystem nach Anspruch 17; und
ein Wareninformationshinzufügungsmittel zum Erzeugen von Wareninformationen, die mit der zu diagnostizierenden Maschinenkomponente verknüpft sind, gemäß Diagnoseergebnisinformationen des Diagnosemittels und zum Hinzufügen dieser Wareninformationen zu den Diagnoseergebnisinformationen;
wobei das Diagnoseergebnisinformationssendemittel um Wareninformationen ergänzte Diagnoseergebnisinformationen an die Leitung sendet, bei denen es sich um die Diagnoseergebnisinformationen handelt, denen die Wareninformationen hinzugefügt wurden.

29. Maschinenkomponentenüberwachungs-, -diagnose- und - verkaufssystem nach den Ansprüchen 27 oder 28, wobei die durch das Wareninformationshinzufügungsmittel hinzugefügten Wareninformationen Preisinformationen und Lieferdatuminformationen enthalten.

30. Maschinenkomponentenüberwachungs-, -diagnose- und - verkaufssystem nach einem der Ansprüche 27-29, wobei die durch das Wareninformationshinzufügungsmittel hinzugefügten Wareninformationen Informationen enthalten, die nach einem Bestellwunsch fragen, wobei das Diagnoseergebnisinformationssendemittel Informationen enthält, die nach dem Bestellwunsch in den um Wareninformationen ergänzten Diagnoseergebnisinformationen fragen, und wobei das Diagnoseergebnisinformationssendemittel in der Lage ist, eine bidirektionale Kommunikation durchzuführen, und in der Lage ist, Vereinbarungsinformationen bezüglich der Informationen zu empfangen, die nach dem Bestellwunsch fragen, der in den um Wareninformationen ergänzten Diagnoseergebnisinformationen enthalten ist.

31. Maschinenkomponentenüberwachungs-, -diagnose- und - verkaufssystem nach Anspruch 30, das des Weiteren ein Bestellungsverarbeitungsmittel umfasst, um Arrangementinformationen zur Lieferung der Maschinenkomponente gemäß einem Inhalt zu erzeugen, der in den Vereinbarungsinformationen, die durch das Diagnoseergebnisinformationssendemittel empfangen werden, bestellt wurde.

32. Maschinenkomponentenüberwachungs-, -diagnose- und - verkaufssystem nach Anspruch 31, das des Weiteren ein elektronisches Entscheidungsfindungsmittel umfasst, um eine Entscheidung gemäß elektronischen Informationen in Abhängigkeit vom Inhalt der Bestellung, die in den durch das Diagnoseergebnisinformationssendemittel empfangenen Vereinbarungsinformationen enthalten ist, zu treffen.

33. Maschinenkomponentenüberwachungs-, -diagnose- und - verkaufssystem nach einem der Ansprüche 27-32, das des Weiteren ein Diagnoseergebnisnutzungs-Produktionsplanungsunterstützungsmittel umfasst, welches das Diagnoseergebnis des Diagnosemittels in der Planung einer Produktion der Maschinenkomponente nutzt.

34. Maschinenkomponentenüberwachungs-, -diagnose- und - verkaufssystem nach Anspruch 27, wobei das Sensorinformationssendemittel einen Informationserfassungsabschnitt zum Erfassen der Informationen enthält, die durch jeden der Sensoren detektiert werden, von denen jeweils einer für jede von mehreren Maschinenkomponenten vorgesehen ist, sowie einen Informationssendeabschnitt zum Senden der durch den Informationserfassungsabschnitt erfassten Informationen an die Leitung enthält.

35. Maschinenkomponentenüberwachungs- und -diagnosesystem nach einem der Ansprüche 27-34, wobei die durch das Diagnosemittel erbrachten Diagnoseergebnisinformationen ein Ergebnis der Feststellung enthalten, ob die Maschinenkomponente bestimmungsgemäß verwendbar ist oder nicht, sowie ein Ergebnis der Feststellung einer verfügbaren Nutzungsdauer enthalten, wenn die Maschinenkomponente als bestimmungsgemäß verwendbar festgestellt wurde.

36. Maschinenkomponentenüberwachungs- und -diagnosesystem nach einem der Ansprüche 27-35, wobei der Sensor dafür geeignet ist, eine Vibrationswellenform und/oder eine Temperatur und/oder ein Bild zu detektieren.

37. Maschinenkomponentenüberwachungs- und -diagnosesystem nach einem der Ansprüche 27-36, wobei das Diagnosemittel zur Diagnose eine Datenbank nutzt, in der Spezifikationen für jeden Typ der Maschinenkomponenten und Diagnosebeispiele registriert sind.

38. Maschinenkomponentenüberwachungs- und -diagnosesystem nach einem der Ansprüche 27-37, wobei das Diagnosemittel zur Diagnose eine Datenbank nutzt, in der Einsatzumgebungen der Maschinenkomponenten registriert sind.

39. Maschinenkomponentenüberwachungs- und -diagnosesystem nach einem der Ansprüche 27-38, wobei das Diagnosemittel einen Untersuchungsabschnitt enthält, um, wenn die Sensorinformationen eingespeist werden, automatisch festzustellen, ob mindestens die Maschinenkomponente bestimmungsgemäß nutzbar ist oder nicht, sowie ein durch Menschenhand bedientes Diagnosemittel enthält, um ein Ergebnis einer durch einen Menschen durchgeführten Diagnose hinzuzufügen oder es auf der Grundlage des Ergebnisses der durch einen Menschen durchgeführten Diagnose zu modifizieren.

40. Maschinenkomponentenüberwachungs- und -diagnosesystem nach Anspruch 27, wobei sowohl das Sensorinformationssendemittel als auch das Sensorinformationsempfangsmittel in der Lage sind, eine bidirektionale Kommunikation auszuführen, und das Sensorinformationssendemittel die Sensorinformationen in Reaktion auf ein Anforderungssignal von dem Sensorinformationsempfangsmittel sendet.

41. Maschinenkomponentenüberwachungs- und -diagnosesystem nach Anspruch 27, wobei das Sensorinformationssendemittel die Sensorinformationen regelmäßig sendet und sie selbst dann sendet, wenn ein zuvor festgelegtes Anomaliesignal empfangen wird.

42. Maschinenkomponentenüberwachungs- und -diagnosesystem nach einem der Ansprüche 27, 34, 40 und 41, wobei die Maschine in der Geschäftsniederlassung der Kundenunternehmung eine Maschine ist, die mehrere Wellen aufweist, und wobei die durch den Sensor zu detektierende Maschinenkomponente ein Lager ist, in dem jede der Wellen gelagert ist, wobei das Sensorinformationssendemittel Sensorinformationen bezüglich dieser mehreren Lager an die Leitung sendet.

## Revendications

1. Un système de surveillance de composants machine, pour surveiller des composants machine (1) utilisés dans un système machine équipé d'une pluralité de tels composants machine, chacun comprenant des éléments à roulement (13), ledit système comprenant :
des moyens de commande ;
une pluralité d'unités de détermination (4), chacune connectée à une pluralité de capteurs (3), lesdites unités de détermination étant connectées aux moyens de commande (5), chacun des capteurs étant agencé sur le composant machine respectif, pour détecter un signal d'influence résultant du passage des éléments à roulement, induit dans le composant machine, chacune des unités de détermination étant susceptible de fonctionner pour déterminer, selon une condition de réglage de processus prédéterminée, un état, tel que la présence ou l'absence d'une anomalie, la durée de vie et autres, du composant machine, associé à un tel capteur, en référence à un signal de sortie provenant du capteur associé ; et
lesdits moyens de commande étant susceptibles de fonctionner pour collecter des résultats de détermination, accomplie par chacune des unités de détermination,
**caractérisé en ce que**
chacune des unités de détermination détermine la présence ou l'absence d'une anomalie dans une forme d'onde de capteur, qui est le signal de sortie provenant du capteur associé, par comparaison entre elles de périodes de formes d'ondes sinusoïdales de la pluralité de capteurs lui étant connectés et, dans l'éventualité dans laquelle une période d'une forme d'onde s'écarte de celle d'autres, détecte une anomalie de forme d'onde de capteur résultant de la forme d'onde de capteur et, ensuite, détermine la présence d'une anomalie de rotation en tant qu'anomalie dans la forme d'onde du capteur, et
chacune des unités de détermination détermine en outre si une composante de signal imputable à un défaut, contenue dans la forme d'onde de capteur, s'écarte ou non d'une plage prédéfinie et, dans l'éventualité dans laquelle le signal imputable à un défaut a été déterminé comme s'écartant de la plage prédéfinie, détermine la présence d'une anomalie de forme d'ondes imputable à un défaut, en tant qu'anomalie dans la forme d'onde de capteur, et supprime du signal de sortie une composant à haute fréquence, qui est une composante de bruit, et une composante principale de signal, qui est une forme d'onde sinusoïdale, à l'aide d'un filtre passe-bas et d'un filtre passe-haut, respectivement, de manière à extraire la composante de signal imputable à un défaut résultant d'une anomalie des composants machine.

2. Le système de surveillance de composants machine tel que revendiqué selon la revendication 1, dans lequel chacune des unités de détermination dispose d'une capacité de détection de présence ou d'absence d'une anomalie déterminée, qui est une anomalie résultant de l'unité de détermination respective elle-même.

3. Le système de surveillance de composants machine tel que revendiqué selon la revendication 1 ou 2, dans lequel les moyens de commande produisent une requête de transmission, séquentiellement, à destination des unités de détermination, et chacune des unités de détermination transmet un résultat de détermination aux moyens de commande, en réponse à la requête de transmission.

4. Le système de surveillance de composants machine tel que revendiqué selon l'une quelconque des revendications 1 à 3, dans lequel les moyens de commande disposent d'une capacité de commander le réglage et la modification de la condition de réglage de processus, pour chacune des unités de détermination, et chacune des unités de détermination est capable de modifier la condition de réglage de processus, selon la commande provenant des moyens de commande.

5. Le système de surveillance de composants machine tel que revendiqué selon l'une quelconque des revendications 1 à 4, dans lequel chacune des unités de détermination dispose d'une pluralité de moyens de traitement de forme d'onde, pour traiter la forme d'onde de capteur selon différentes techniques de traitement de forme d'onde, et dispose d'une capacité de sélectionner l'un des moyens de traitement de forme d'onde, devant être utilisé pour traiter la forme d'onde de capteur, et les moyens de commande disposent d'une capacité d'appliquer une commande de sélection, nécessaire pour sélectionner l'un des moyens de traitement de forme d'onde, pour l'unité de détermination particulière.

6. Le système de surveillance de composants machine tel que revendiqué selon l'une quelconque des revendications 1 à 4, dans lequel chacune des unités de détermination dispose d'une pluralité de moyens de traitement de forme d'onde, pour traiter la forme d'onde de capteur, selon différentes techniques de traitement de forme d'onde, et dispose d'une capacité de sélection d'un des moyens de traitement de forme d'onde, pour chacun des capteurs.

7. Le système de surveillance de composants machine tel que revendiqué selon l'une quelconque des revendications 1 à 6, dans lequel un câblage, utilisé pour connecter les unités de détermination et les capteurs associés, est utilisé sous la forme d'un câble gainé pour capteur, comprenant une gaine ayant une caractéristique d'étanchéité à l'eau, d'étanchéité aux poussières, d'étanchéité à la rouille, d'étanchéité à l'humidité, et de résistance à l'huile, à la chaleur et aux bruits électromagnétiques.

8. Le système de surveillance de composants machine tel que revendiqué selon l'une quelconque des revendications 1 à 7, dans lequel chacune des unités de détermination dispose d'un terminal relai, et les unités de détermination sont câbles ensemble séquentiellement, par l'intermédiaire des terminaux relais respectifs.

9. Le système de surveillance de composants machine tel que revendiqué selon l'une quelconque des revendications 1 à 8, dans lequel le système machine est une agrégation d'une pluralité d'éléments constituant un système machine, chacun incluant la pluralité de composants machine, et dans lequel chacune des unités de détermination est utilisée, une pour chacun des éléments constituant un système machine, et le capteur connecté à chacune des unités de détermination est agencé sur le composant machine prévu dans l'un des éléments constituant un système machine qui est associé à une telle unité de détermination.

10. Le système de surveillance de composants machine tel que revendiqué selon l'une quelconque des revendications 1 à 9, dans lequel les moyens de commande disposent d'un mode de surveillance automatique et d'un mode exploité en terminal, dans lequel le mode de réalisation surveillance automatique est un mode
dans lequel un résultat de détermination, accomplie par chacune des unités de détermination, est acquis par envoi séquentiel d'une requête de transmission, de manière à demander à l'unité de détermination respective d'envoyer le résultat de détermination, et le mode exploité en terminal est un mode dans lequel, par production d'une requête de transmission, pour demander à l'unité de détermination respective d'envoyer le résultat de détermination et une information autre que le résultat de détermination, une réponse à celle-ci est acquise.

11. Le système de surveillance de composants machine tel que revendiqué selon l'une quelconque des revendications 1 à 10, dans lequel chacune des unités de détermination capture, sous forme de données numériques, la forme d'onde de capteur qui est le signal de sortie provenant de chacun des capteurs lui étant connectés, et les moyens de commande comprennent des moyens de stockage de données de forme d'onde, pour stocker la forme d'onde de capteur, qui sont les données numériques capturées par chacune des unités de détermination.

12. Le système de surveillance de composants machine tel que revendiqué selon l'une quelconque des revendications 1 à 11, comprenant en outre des moyens de génération d'information d'entretien, pour générer une information d'entretien prédéterminée, associée au composant machine, d'après un résultat de détermination accomplie par chacune des unités de détermination.

13. Le système de surveillance de composants machine tel que revendiqué selon l'une quelconque des revendications 1 à 12, comprenant en outre des moyens de traitement d'information, positionnés en un emplacement distant des moyens de commande et connectés aux moyens de commande par un réseau de communication, et dans lequel les moyens de commande disposent d'une capacité de collecter non seulement un résultat de détermination, accomplie par chacune des unités de détermination, mais également une forme d'onde de capteur, introduite à chaque unité de détermination, lesdits moyens de traitement d'information comprenant des moyens de collecte à distance de données, pour collecter le résultat de la détermination et la forme d'onde de capteur, que les moyens de commande ont collectés auprès de chacune des unités de détermination.

14. Le système de surveillance de composants machine tel que revendiqué selon l'une quelconque des revendications 1 à 13, dans lequel chacun des capteurs est agencé, sur le composant machine respectif, pour détecter un signal d'influence, résultant du passage de l'élément à roulement, induit dans le composant machine respectif, et chacune des unités de détermination comprend des moyens de filtrage, pour extraire une composante d'un signal imputable à un défaut, à partir d'une forme d'onde de capteur qui est un signal de sortie provenant du capteur connecté à unetelle unité de détermination, et une section de détermination, susceptible de fonctionner pour comparer le signal imputable à un défaut, ayant été détecté, à une plage prédéfinie, de manière à déterminer la présence ou l'absence d'une anomalie ;
lesdits moyens de filtrage extrayant la composant du signal imputable à un défaut, en accomplissant de façon répétée, à un intervalle de temps prédéterminé, un processus de récupération de données de plage de temps prédéterminées, à partir d'un flux de données de formes d'onde de capteur et de détermination d'une différence, entre des valeurs maximales et minimales des données récupérées.

15. Le système de surveillance de composants machine tel que revendiqué selon l'une quelconque des revendications 1 à 14, dans lequel l'unité de détermination, qui comprend :
un sélecteur, pour modifier séquentiellement l'un d'une pluralité de canaux d'entrée auxquels sont introduits des signaux de forme d'onde de capteur analogiques, et des moyens de conversion A/N, pour effectuer une conversion A/N sur un signal de sortie provenant du sélecteur ;
une première mémoire, pour stocker le signal de forme d'onde ayant subi une conversion A/N ;
un processeur, pour effectuer le traitement de forme d'onde du signal de forme d'onde, stocké dans la première mémoire, selon une condition de réglage d processus, et accomplir une détermination prédéterminée, à partir d'un résultat de traitement de forme d'onde selon une plage prédéfinie ;
une deuxième mémoire, pour stocker le résultat du traitement de forme d'onde et le résultat de détermination accompli par le processeur ; et
une section d'interface, pour transmettre des contenus stockés dans les première et deuxième mémoires, en réponse à une commande de requête, lui étant appliquée à partir d'un circuit externe.

16. Un système de surveillance et de diagnostic de composants machine, pour surveiller et diagnostiquer un composant machine comprenant des éléments à roulement, ledit système comprenant :
le système de surveillance de composants machine tel que revendiqué selon l'une quelconque des revendications 1 à 15,
des moyens de transmission d'information de capteur, pour transmettre une information détectée par le capteur, qui détecte un facteur associé à la durée de vie du composant machine incorporé dans une machine utilisée par une société client localisée en un emplacement distant ou une information obtenue par traitement de l'information brute détectée par le capteur, à une ligne ;
des moyens de réception d'information de capteur, installés en un établissement commercial d'une société de fabrication et de vente, qui fabrique et vend le composant machine, pour recevoir l'information de capteur transmise par la ligne ;
des moyens de diagnostic, pour diagnostiquer un état de la durée de vie du composant machine, en référence à l'information de capteur, reçue par les moyens de réception d'information de capteur ;
des moyens de transmission d'information de résultat de diagnostic, pour transmettre une information de résultat de diagnostic fournie à la ligne par les moyens de diagnostic ; et
des moyens de réception d'information de résultat de diagnostic, installés au niveau de l'établissement commercial de la société cliente, pour recevoir l'information de résultat de diagnostic transmise par la ligne.

17. Un système de surveillance et de diagnostic de composants machine, pour surveiller et diagnostiquer un composant machine comprenant des éléments à roulement, ledit système comprenant :
le système de surveillance de composants machine tel que revendiqué selon l'une quelconque des revendications 1 à 15 ;
des moyens de réception d'information de capteur, installés au niveau d'un établissement commercial d'une société de fabrication et de vente, fabricant et vendant le composant machine, pour recevoir au moyen d'eux une information de ligne détectée par un capteur, pour détecter un facteur associé à la durée de vie du composant machine incorporé dans une machine utilisée par une société cliente, située en un emplacement distant ;
des moyens de diagnostic, pour diagnostiquer un état de la durée de vie du composant machine, en référence à l'information de capteur reçue par les moyens de réception d'information de capteur ; et
des moyens de transmission d'information de résultat de diagnostic, pour transmettre à la ligne une information concernant un résultat de diagnostic, établi par les moyens de diagnostic.

18. Le système de surveillance et de diagnostic de composants machine tel que revendiqué selon la revendication 16, dans lequel les moyens de réception d'information de capteur comprennent une section de collecte d'information, pour collecter l'information détectée par chacun des capteurs prévus, un pour chacun d'une pluralité de composants machine, et une section de transmission d'information, pour transmettre à la ligne l'information, collectée par la section de collecte d'information.

19. Le système de surveillance et de diagnostic de composants machine tel que revendiqué selon les revendications 16 à 18, dans lequel l'information de résultat de diagnostic, fournie par les moyens de diagnostic, inclut un résultat de détermination du fait de savoir si oui ou non le composant machine est correctement utilisable, et un résultat de détermination d'une durée d'utilisation disponible, si la machine a été déterminée comme étant utilisable correctement.

20. Le système de surveillance et de diagnostic de composants machine tel que revendiqué selon l'une quelconque des revendications 16 à 19, dans lequel le capteur est susceptible de fonctionner pour détecter au moins une forme d'onde de vibration, une température et une image.

21. Le système de surveillance et de diagnostic de composants machine tel que revendiqué selon l'une quelconque des revendications 16 à 20, dans lequel les moyens de diagnostic font utilisation, pour le diagnostic, d'une base de données, dans laquelle sont enregistrées des spécifications pour chaque type des composants machine et des exemples de diagnostics.

22. Le système de surveillance et de diagnostic de composants machine tel que revendiqué selon l'une quelconque des revendications 16 à 21, dans lequel les moyens de diagnostic utilisent pour le diagnostic une base de données, dans laquelle sont enregistrés des environnements d'utilisation des composants machine.

23. Le système de surveillance et de diagnostic de composants machine tel que revendiqué selon l'une quelconque des revendications 16 à 22, dans lequel les moyens de diagnostic comprennent une section d'examen, pour automatiquement déterminer, lorsque l'information de capteur est fournie en entrée, si oui ou non au moins le composant machine est correctement utilisable, et des moyens de diagnostic humain, pour ajouter un résultat de diagnostic, accompli par un humain, au résultat de diagnostic accompli par la section d'examen, ou le modifier d'après le résultat de diagnostic accompli par un humain.

24. Le système de surveillance et de diagnostic de composants machine tel que revendiqué selon la revendication 16, dans lequel chacun, des moyens de transmission d'information de capteur et des moyens de réception d'information de capteur, est capable d'accomplir une communication bidirectionnelle, et les moyens de transmission d'information de capteur transmettent l'information de capteur, en réponse à un signal de requête émanant des moyens de réception d'information de capteur.

25. Le système de surveillance et de diagnostic de composants machine tel que revendiqué selon la revendication 16, dans lequel les moyens de transmission d'information de capteur transmettent l'information de capteur sur une base régulière, et la transmettent même si un signal d'anomalie prédéterminée est reçu.

26. Le système de surveillance et de diagnostic de composants machine tel que revendiqué selon l'une quelconque des revendications 16, 18, 24 et 25, dans lequel la machine située dans l'établissement commercial de la société cliente est une machine comprenant une pluralité d'arbres et dans lequel le composant machine devant être détecté par le capteur est un palier supportant chacun des arbres, lesdits moyens de transmission d'information de capteur transmettant à la ligne une information de capteur au sujet de cette pluralité de paliers.

27. Un système de surveillance, de diagnostic et de vente de composants machine, comprenant :
le système de surveillance et de diagnostic de composants machine tel que revendiqué selon l'une quelconque des revendications 16 et 18 à 26 ; et
des moyens d'addition d'information concernant une marchandise, pour générer une information concernant une marchandise, associés au composant machine devant être diagnostiqué selon l'information de résultat de diagnostic provenant des moyens de diagnostic, et pour ajouter cette information concernant la marchandise à l'information de résultat de diagnostic ;
dans lequel les moyens de transmission d'information de résultat de diagnostic transmettent à la ligne une information concernant la marchandise, à laquelle est ajoutée une information de résultat de diagnostic, qui est l'information de résultat de diagnostic ajoutée à l'information concernant la marchandise, et les moyens de réception d'information de résultat de diagnostic reçoivent l'information concernant la marchandise, à laquelle est ajoutée l'information de résultat de diagnostic transmise par la ligne.

28. Un système de surveillance, de diagnostic et de vente de composants machine, pour surveiller, diagnostiquer et vendre un composant machine comprenant des éléments à roulement, ledit système comprenant :
le système de surveillance et de diagnostic de composants machine tel que revendiqué selon la revendication 17 ; et
des moyens d'addition d'information concernant une marchandise, pour générer une information concernant une marchandise, associés au composant machine devant être diagnostiqué selon l'information de résultat de diagnostic provenant des moyens de diagnostic, et pour ajouter cette information concernant la marchandise à l'information de résultat de diagnostic ;
dans lequel les moyens de transmission d'information de résultat de diagnostic transmettent à la ligne une information concernant la marchandise, à laquelle est ajoutée une information de résultat de diagnostic, qui est l'information de résultat de diagnostic ajoutée à l'information concernant la marchandise.

29. Le système de surveillance, de diagnostic et de vente de composants machine tel que revendiqué aux revendications 27 ou 28, dans lequel l'information concernant la marchandise, ajoutée par les moyens d'addition d'information concernant la marchandise, comprend une information de prix et une information de date de livraison.

30. Le système de surveillance, de diagnostic et de vente de composants machine tel que revendiqué selon l'une quelconque des revendications 27 à 29, dans lequel l'information concernant la marchandise, ajoutée par les moyens d'addition d'information concernant la marchandise, comprend une information demandant ce qu'il est en d'une intention de commander, dans lequel les moyens de transmission d'information de résultat de diagnostic comprennent une information demandant ce qu'il est en d'une intention de commander, dans l'information concernant la marchandise, à laquelle est ajoutée une information de résultat de diagnostic, et dans lequel les moyens de transmission d'information de résultat de diagnostic sont en mesure de réaliser une communication bi-directionelle, et en mesure de recevoir une information d'agrément au sujet de l'information demandant ce qu'il est en d'une intention de commander, contenue dans l'information concernant la marchandise, à laquelle est ajoutée une information de résultat de diagnostic.

31. Le système de surveillance, de diagnostic et de vente de composants machine tel que revendiqué à la revendication 30, comprenant en outre des moyens de traitement par ordre, pour générer une information d'agencement de la livraison du composant machine, selon des contenus classés par ordre dans l'information d'agrément ayant été reçue par les moyens de transmission d'information de résultat de diagnostic.

32. Le système de surveillance, de diagnostic et de vente de composants machine tel que revendiqué à la revendication 31, comprenant en outre des moyens électroniques de prise de décision, pour prendre une décision selon une information électronique, dépendant des contenus de l'ordre contenu dans l'information d'agrément reçue par les moyens de transmission d'information de résultat de diagnostic.

33. Le système de surveillance, de diagnostic et de vente de composants machine tel que revendiqué selon l'une quelconque des revendications 27 à 32, comprenant en outre des moyens supports de planification de production, utilisant un résultat de diagnostic, faisant utilisation du résultat de diagnostic émis par les moyens de diagnostic, dans la planification d'une production du composant machine.

34. Le système de surveillance, de diagnostic et de vente de composants machine tel que revendiqué à la revendication 27, dans lequel les moyens de transmission d'information de capteur comprennent une section de collecte d'information, pour collecter l'information détectée par chacun des capteurs prévus, un pour chacun d'une pluralité de composants machine, et une section de transmission d'information, pour transmettre à la ligne l'information, collectée par la section de collecte d'information.

35. Le système de surveillance et de diagnostic de composants machine tel que revendiqué selon l'une quelconque des revendications 27 à 34, dans lequel l'information de résultat de diagnostic, fournie par les moyens de diagnostic, inclut un résultat de détermination du fait de savoir si oui ou non le composant machine est correctement utilisable, et un résultat de détermination d'une durée d'utilisation disponible, si la machine a été déterminée comme étant utilisable correctement.

36. Le système de surveillance et de diagnostic de composants machine tel que revendiqué selon l'une quelconque des revendications 27 à 35, dans lequel le capteur est susceptible de fonctionner pour détecter au moins une forme d'onde de vibration, une température et une image.

37. Le système de surveillance et de diagnostic de composants machine tel que revendiqué selon l'une quelconque des revendications 27 à 36, dans lequel les moyens de diagnostic font utilisation, pour le diagnostic, d'une base de données, dans laquelle sont enregistrées des spécifications pour chaque type des composants machine et des exemples de diagnostics.

38. Le système de surveillance et de diagnostic de composants machine tel que revendiqué selon l'une quelconque des revendications 27 à 37, dans lequel les moyens de diagnostic utilisent pour le diagnostic une base de données, dans laquelle sont enregistrés des environnements d'utilisation des composants machine.

39. Le système de surveillance et de diagnostic de composants machine tel que revendiqué selon l'une quelconque des revendications 27 à 38, dans lequel les moyens de diagnostic comprennent une section d'examen, pour automatiquement déterminer, lorsque l'information de capteur est fournie en entrée, si oui ou non au moins le composant machine est correctement utilisable, et des moyens de diagnostic humain, pour ajouter un résultat de diagnostic, accompli par un humain, au résultat de diagnostic accompli par la section d'examen, ou le modifier d'après le résultat de diagnostic accompli par un humain.

40. Le système de surveillance et de diagnostic de composants machine tel que revendiqué à la revendication 27, dans lequel chacun, des moyens de transmission d'information de capteur et des moyens de réception d'information de capteur, est capable d'accomplir une communication bidirectionnelle, et les moyens de transmission d'information de capteur transmettent l'information de capteur, en réponse à un signal de requête émanant des moyens de réception d'information de capteur.

41. Le système de surveillance et de diagnostic de composants machine tel que revendiqué à la revendication 27, dans lequel les moyens de transmission d'information de capteur transmettent l'information de capteur sur une base régulière, et la transmettent même si un signal d'anomalie prédéterminée est reçu.

42. Le système de surveillance et de diagnostic de composants machine tel que revendiqué selon l'une quelconque des revendications 27, 34, 40 et 41, dans lequel la machine située dans l'établissement commercial de la société cliente est une machine comprenant une pluralité d'arbres et dans lequel le composant machine devant être détecté par le capteur est un palier supportant chacun des arbres, lesdits moyens de transmission d'information de capteur transmettant à la ligne une information de capteur au sujet de cette pluralité de paliers.
